(19) **Europäisches Patentamt**

**European Patent Office**

**Office européen des brevets**

(11) **EP 0 864 018 B1**

(12) **EUROPÄISCHE PATENTSCHRIFT**

(45) Veröffentlichungstag und Bekanntmachung des Hinweises auf die Patenterteilung:
**14.04.2004   Patentblatt 2004/16**

(51) Int Cl.⁷: **E03F 5/10**, E03F 1/00

(21) Anmeldenummer: **96942285.6**

(22) Anmeldetag: **30.11.1996**

(86) Internationale Anmeldenummer:
**PCT/EP1996/005311**

(87) Internationale Veröffentlichungsnummer:
**WO 1997/021005 (12.06.1997 Gazette 1997/25)**

(54) **VERFAHREN ZUM BEEINFLUSSEN EINES ABWASSERSTROMES**

METHOD OF INFLUENCING A FLOW OF WASTE WATER

PROCEDE PERMETTANT D'INFLUER SUR UN FLUX D'EAUX USEES

(84) Benannte Vertragsstaaten:
**AT BE CH DE ES FR GB IT LI NL**

(30) Priorität: **02.12.1995  DE 19545047**

(43) Veröffentlichungstag der Anmeldung:
**16.09.1998   Patentblatt 1998/38**

(73) Patentinhaber: **Güthler, Renate
79790 Küssaberg-Küssnach (DE)**

(72) Erfinder:
• **GÜTHLER, Harald
D-79790 Küssaberg (DE)**

• **MÜHLHAUPT, Ralf
D-79790 Küssaberg (DE)**

(74) Vertreter: **Weiss, Peter, Dr.
Dr. Weiss, Weiss & Brecht,
Postfach 12 50
78229 Engen (DE)**

(56) Entgegenhaltungen:
| WO-A-86/04629 | CA-A- 208 942 |
| DE-A- 3 110 104 | DE-A- 4 220 880 |
| DE-U- 9 406 758 | FR-A- 2 675 562 |
| US-A- 3 464 210 | |

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft eine Vorrichtung zum Beeinflussen eines Abwasserstromes in einem Abwassersystem einer Siedlungswasserwirtschaft, insbesondere zur Reduktion der Spitzenabflüsse in diesen Abwassersystemen, mit einem Kanalschacht und einem darin eingesetzten, der Begrenzung des Durchströmquerschnitts im Kanalschacht dienendes Drosselorgan, wobei das Drosselorgan einen Überlauf aufweist, über den das Abwasser vor Überschreiten eines vorbestimmten maximalen Abwasserspiegels beim Anstauen vor dem Drosselorgan in den gleichen Kanalschacht nach dem Drosselorgan gelangen sollte, und wobei das Drosselorgan aus einer den Überlauf aufweisenden Kanalstaublende und einer vertikal verstellbaren Verstellblende zusammensetzt ist. Eine Vorrichtung dieser Art ist aus der DE 42 20 880 A1 bekannt.

Abwassersysteme bzw. Kanalisationen sind von einem ausserordentlich diskontinuierlichen Eintrag geprägt, der die Betriebsabläufe grösstenteils unberechenbar macht. Dem Planer bleibt daher nur der Weg, auf der Grundlage der Bemessungsrichtlinien aus Spitzenniederschlägen Kapazitäten vorzusehen, die in der Lage sind, auch solche grösseren Niederschlagsmengen aufzunehmen. Deutlich wird hierbei, dass diese Kapazitäten bei Normalbetrieb riesige Volumenreserven beinhalten, die bisher infolge fehlender geeigneter technischer Ausrüstung nicht optimal genutzt werden konnten.

Aus der GB-PS 1 543 374 ist ein System bekannt, bei dem in ein Abwassersystem Staustrecken eingeschaltet sind. Hierzu sind separate Rückhaltebecken gebildet, in denen das Abwasser zurückgehalten wird. Am Ende der Staustrecke ist ein Schacht vorgesehen, aus dem der normale Abwasserkanal weiterführt, während seitlich der Überlauf zu einem Vorfluter abgeführt wird.

Bekannt sind auch Drosselschieber, die einerseits manuell ohne zusätzlich technische Ausrüstung, andererseits elektrisch oder pneumatisch aufgrund von Durchflussmessungen gesteuert werden. Ein derartiges Entwässerungssystem ist bspw. in der DE-OS 34 18 813 gezeigt. Durch eine Drosselvorrichtung findet ein Anstauen des Abwassers in dem Sammler statt, bis ein vor dem Sammler angeordneter Überlauf erreicht ist. Von diesem Überlauf gelangt dann das Abwasser in einen Vorfluter. Auch hier sind separate Kanäle für den Überlauf zum Vorfluten notwendig.

Heute soll jedoch die Einleitung von Spitzenregenabflussmengen und damit auch von Schmutzfracht, die über die Regenüberläufe in die Gewässer erfolgt, auf ein Minimum reduziert und an die Belastung des jeweiligen Vorfluters angepasst werden. Hierdurch soll der ökologische "Stress" in Vorflutern reduziert werden.

Aus der DE 42 20 880 A1 ist auch ein Abwasserkanalsystem bekannt, bei dem das in den Kanalnetzen vorhandene ausserordentlich grosse Volumen, das nur selten zu Rückhaltezwecken benutzt wird, ausgenutzt wird. Hierzu sind im Abwasserkanalsystem getrennte Leitungen für Regen- und Schmutzwasser vorgesehen. Ggf. kann auch eine Kanalstauhaltung durchgeführt werden, indem Leitungen mit unterschiedlichen Durchmesser benutzt werden, wie dies bereits von E. Malpricht, Lehr- und Handbuch der Abwassertechnik, Berlin 1982, Seite 406, vorgeschlagen wird.

Der vorliegenden Erfindung liegt die Aufgabe zugrunde, eine kostengünstige Lösung anzubieten, um vorhandene Kanalstauräume nutzbar zu machen und die gesamte Abwasserführung zu verbessern.

Zur Lösung dieser Aufgabe führt, dass die Verstellblende als Verstellkeilblende mit einem in das Abwasser einzutauchenden Keil oder keilförmigen Ausschnitt ausgebildet ist und die Kanalstaublende und die Verstellkeilblende von der Wand des Kanalschachtes abstehen und entsprechend keilförmig oder gekrümmt ausgebildet sind und gegen die Fliessrichtung des Abwassers anzustellen sind.

Durch diese Vorrichtung können die Spitzenabflussmengen bei Entlastungen von Abwasser reduziert und aufgrund der Vergleichmässigung des Abflusses in Verbindung mit der bewusst herbeigeführten Vorsentimentation die Überlaufschwellen an Regenüberläufen heruntergesetzt werden. Damit erhalten die Kläranlagen mehr Schmutzfracht und weniger hydraulische Belastung.

Die heutigen Abwassersysteme, die aufgrund ihrer an die Bemessungsrichtlinien angepassten Dimensionierungen über Transportkapazitäten verfügen, die im Jahr nur wenige Male, nämlich ca. 5 - 10% genutzt werden, bergen riesige Volumenreserven in sich, die bisher ungenutzt waren. Da im Sinne der Richtlinien für die Bemessung für die Gestaltung von Regenentlastungsanlagen in Mischwasserkanälen ATV A 128 die Anrechenbarkeit solcher Speicherräume zulässig ist, kann bei geschickter Nutzung dieser vorhandenen Retentionsvolumen eine Redimensionierung der bisher geplanten Regenbecken erfolgen und auf ein Mindestmass reduziert werden.

Eine verbesserte Wirkung eines Kanalsystems lässt sich durch eine intelligente Abflusssteuerung mittels der Vorrichtungen im Kanalnetz realisieren. Hierbei soll erreicht werden, dass durch Einsatz von den geeigneten Vorrichtungen ohne komplizierte Mess-Regel und Fernwirktechnik auf einfache Art dezentral über das gewählte Drosselorgan eine Abflussverzögerung erzeugt wird. Dies hat gleichzeitig zur Folge, dass das Kanalnetz als Retentionskanalnetz genutzt wird und damit die riesigen Volumenreserven zu anrechenbaren Speichervolumen im Sinne der Regenwasserbehandlung umfunktioniert werden können.

Mit der vorliegenden Erfindung können die anhand des Ganglinienverlaufes nachgewiesenen Spitzenabflusswerte für die untenliegenden Bereiche reduziert und damit die Häufigkeit und Wassermenge beim Eintrag in das Gewässer reduziert werden. Gleichzeitig besteht die Möglichkeit, dass auf diesem Wege vorhandene Konfliktpunkte durch diese Form der Abflussverzögerung, die bereits an den peripheren Bereichen des Kanalnetzes erfolgt, beseitigt werden.

Beispiele haben gezeigt, dass bei geschickter Ausnutzung der vorhandenen Retentionsräume der Zufluss zum Gewässer auf ca. ein Drittel des anfallenden Zuflusses aus dem Einzugsgebiet reduziert werden konnte. Damit wird insbesondere dem sensiblen Gewässer geholfen, das in der Regel einem grösseren Gewässer zuströmt. Die hierdurch entstehende Verzögerung im Vorflutbereich wirkt sich gesamthaft regional bis überregional bedeutsam aus.

Eine Abflussverzögerung und damit Vergleichmässigung des Mischwasserablaufes bringt im Zulauf der Kläranlage automatisch eine Reduktion der Stossbelastung mit sich.

Durch eine Vielzahl von eingesetzten Vorrichtungen soll das Kanalnetz wie ein Schwamm wirken, der sich verzögert entleert, was zur Folge hat, dass der Kläranlage mehr Schmutzfracht zugeleitet wird, die jedoch eben nicht in den Vorfluter gelangt. Die Kläranlage ist bei gleichmässiger Belastung jedoch eher in der Lage, diese zusätzliche Beaufschlagung mit Schmutzfracht zu verarbeiten, als infolge der bekannten Spitzenstossbelastungen. Somit entsteht nicht nur ein Beitrag zum Gewässerschutz, sondern ohne zusätzliche wesentlichen Kosten auch eine optimierte Auslastung der Kläranlage und damit eine Verbesserung ihres Wirkungsgrades.

Ferner soll das Ziel erreicht werden, durch einen gedrosselten Misch- bzw. Regenwasserabfluss eine Abflussverzögerung zu erzeugen und den dabei auftretenden Sedimentationsprozess innerhalb des Abwassersystems zur Verbesserung des Umweltschutzes zu nutzen. Während der Misch- bzw. Regenwasserableitung sollen alle mögliche Retentionsräume des Abwassersystems so genutzt werden, dass über die gezielt an zahlreichen Stellen des Kanalnetzes eingesetzten, geeigneten Vorrichtungen ein möglichst reduzierter, verzögerter Abfluss erfolgt. Bei Einsatz von Vorrichtungen gemäss der vorliegenden Erfindung soll jetzt generell ein gedrosselter Abfluss erfolgen.

Erst wenn alle möglichen Retentionsräume des Kanalnetzes durch den im Zuge des Abflusses erzeugten Füllvorgang optimal genutzt sind, werden auch die Drosselorgane quasi übersprungen und der Abflusserfolg beschleunigt. Nur in diesen Fällen gelangt verschmutztes Abwasser zu den Vorflutern. Ansonsten werden den Vorflutern, also den Flüssen und Bächen, nur bereits mechanisch vorgereinigtes Misch- bzw. Regenwasser über Regenüberläufe abgeschlagen bzw. zugeführt.

Dadurch, dass der ursprünglich diskontinuierliche Abfluss nunmehr vergleichmässigt wird, erfolgt gleichzeitig auch eine Nutzung des Sedimentationsprozesses innerhalb des Abwassersystems, d.h., es wird mehr Schmutzfracht bei gleicher Zuflussmenge den Kläranlagen zugeführt, während in die Vorfluter, d.h., in die Flüsse und Bäche, weniger Schmutzfracht bei gleicher Zuflussmenge gelangt.

Parallel zur bewusst gewollten Abflussverzögerung werden hydraulisch ausgelastete bzw. überlastete Kanalstränge durch die vorliegende Erfindung entlastet und Konfliktpunkte im Kanalnetz stark reduziert. Dies hat zur Folge, dass die ursprünglich hydraulisch überlasteten Kanalstränge nun durch die Reduktion des Spitzenabflusses eine Entlastung erfahren, so dass deren Erneuerung aus Gründen der hydraulischen Überlastung nicht mehr erforderlich wird.

Das Einsetzen von Drosselorganen könnte durch eine dynamische Abflussberechnung in dem Abwassersystem simuliert werden. Es wird ein gewollter Abfluss erzeugt und durch Iterations- und Optimierungsschritte soweit verbessert, dass trotz Reduktion der Fliessgeschwindigkeit noch ein ausreichender Abfluss gegeben ist, gleichzeitig aber auch eine genügende Sedimentation in dem Abwassersystem erfolgt. Bei dieser Simulation wird ein spezielles Berechnungsverfahren mit integrierter Kennlinie angewandt. Ferner werden diejenigen Stauspiegellagen dargestellt, die aufgrund des verzögerten Abflusses erzeugt werden sollen.

Im Grunde soll das Ergebnis bei Einsatz der erfindungsgemässen Vorrichtungen vergleichbar sein mit einem Schwamm, der sich vollgesaugt hat und nur die Menge zum Abfluss bringt, die einerseits der Kläranlage zugemutet werden soll und andererseits den Vorflutern in Anlehnung an deren Belastbarkeit zugemutet werden kann.

Die Nutzbarmachung der vorhandenen Kanalstauräume führt zur Kosteneinsparung bei neu zu bauenden Regenüberlaufbecken bzw. Regenklärbecken oder Regenrückhaltebecken durch Beckenvolumeneinsparung. Für das Abwasservolumen, welches durch das Drosselorgan in dem vorhandenen Abwassersystem zurückgehalten wird, braucht kein Volumen in den oben erwähnten Becken gebildet zu werden. Das Volumen dort kann deshalb wesentlich verringert werden, was zu erheblichen Kosteneinsparungen führt. Das Stauvolumen bildet sich durch optimale Ausnutzung der Rohrvolumen des Abwassersystems. Auch Schächte können in geringem Masse mitherangezogen werden. Es wird ein kostengünstiger Weg aufgezeigt, sowohl vorhandene als auch neuzubauende Kanalsysteme mit der erfindungsgemässen Vorrichtung auszurüsten, wobei ein Höchstmass an Betriebssicherheit bei gleichzeitiger Wartungsfreundlichkeit gegeben ist, so dass die Betriebskosten sich auf ein absolutes Minimim reduzieren lassen. Durch die Abflussverzögerung bei oben liegenden entfernteren Kanälen können unangenehme Überflutungen und Rückstaus, die auf unterschiedlich schnelle Fliessvorgänge bei nicht ausreichend dimensionierten Kanälen oder bei hydraulisch mangelhaft ausgebildeten Anschlüssen und Verbindungen zurückzuführen sind, in ihrer Häufigkeit reduziert oder generell verhindert werden.

Die erfindungsgemässe Vorrichtung kann für alle Kanaldurchmesser sowohl nachträglich unter Verwendung der unterschiedlichsten Baustoffe als auch im Zuge von Neubaumassnahmen ebenfalls unter Verwendung der geeigneten Baustoffe, wie Beton, Stahlblech oder Kunststoff eingebaut werden. Der Einbau erfolgt dort, wo sich aufgrund von Berechnungen die Anordnung eines Stauvolumens als richtig bzw. notwendig erweist. Hierzu wird ein speziell darauf bezogenes Berechnungsverfahren angewendet.

Das Drosselorgan besteht aus einer Kanalstaublende und einer Verstellkeilblende. Die Verstellkeilblende wird zur Feinabstimmung der Durchflussmengen herangezogen.

Ihre Herstellung geschieht für alle in Abwassersystemen erforderlichen Dimensionen und in Baustoffen, die aufgrund ihrer Statik bzw. Korrosionsfestigkeit bzw. Zweckmässigkeit ausgeführt werden können. Insbesondere sind hierbei die Baustoffe Beton, Edelstahl, verzinkter Stahl oder Kunststoffe aller Art genannt.

Die erfindungsgemässe Vorrichtung soll auch selbstreinigend ausgebildet sein. Hierzu ist es keilförmig oder gekrümmt gegen die Fliessrichtung angestellt, so dass bei einem Rückstau Wirbel gebildet werden, welche verhindern, dass sich feste Gegenstände an den Drosselorganen festlegen bzw. verkeilen.

Im Falle einer Nachrüstung von bestehenden Abwassersystemabschnitten könnten die Abmessungen des Drosselorgans den Durchmesser der Schachtöffnungen übersteigen. Aus diesem Grund wird bevorzugt das Drosselorgan als Abflussbremse mehrteilig angefertigt, so dass es in den Schächten zusammengesetzt und befestigt werden kann. Zur Verbindung der einzelnen Teile des Drosselorgans wird auf einen Teil ein Stahlblech wahlweise aufgeschweisst, vernietet, verschraubt oder mit einer Steckverbindung angebracht, das wiederum mit Hilfe von Verbindungsmitteln mit dem auf dem anderen Teil angebrachten Verbundelement verbunden wird. Auf diese Weise geschieht bspw. der Zusammenbau von Kanalstaublende und Verstellkeilblende.

Kanalstaublende und/oder Verstellkeilblende brauchen im übrigen nicht immer aus rundem Blech od. dgl. geformt sein. Insbesondere die Verstellkeilblende kann auch eine vertikal gerade oder geneigte Form aufweisen. Es gibt auch vorgezogene runde Anströmflächen oder zurückgesetzte runde Anströmflächen oder sonstige beliebige Formen. Hier soll der Erfindung keine Grenze gesetzt sein.

**Ausführungsformen der Vorrichtung ("Styx" Abflußbremse)**

1. Anpassung der Abflußöffnung

2. Änderung das Überlaufs

    a) geneigter Überlauf
    b) eingeschnittener Überlauf

3. Schrägstellung der Bremse

4. Stausturzschacht

5. Spindel zur Einstellung der Abflußöffnung

6. Mehrteiligkeit

7.

    a) Gerade senkrechte Blechform

        I) schräge Anströmfläche gerade
        II) schräge Anströmfläche rund
        III) schräge Anströmfläche vorgezogen, rund
        IV) schräge Anströmfläche zurückgesetzt, rund

    b) Gerade geneigte Blechform

        I) gerade Anströmfläche
        II) runde Anströmfläche

8. Verfahren

9.Spülkasten

10.Bremse ohne Verstellblende

### 1. Anpassung der Abflußöffnung (Bild 1)

Um den im Abwasser enthaltenen Grobstoffen einen ungehinderten Abfluß zu ermöglichen, wird die Verstellblende nicht mehr als ein in das Gerinne hineinragender Keil ausgebildet, sondern dem Gerinneprofil angepaßt. Die Blende erhält zusätzlich einen der Sohle entgegengesetzten dreieckförmigen Ausschnitt der den von der ATV geforderten freien Kugeldurchgang von 0 200 mm gewährleistet.
Durch die Beibehaltung des normalen Abflußgerinnes werden außerdem weniger Turbulenzen erzeugt, die sich wiederum hydraulisch günstiger auf das Abflußverhalten auswirken.

**Legende für Bild 1-4, 7-16:**

1    Profilbeton auf Sauberkeitsschicht
2    Schachtgerinnensohle
3    Bankett
4    Schachtunterteil
5    Schachtring
6    Abflussbremse selbstreinigend
7    Verstellblende
8    Befestigungsschrauben

**Legende abweichend für Bild 5:**

1    Profilbeton
2    Sauberkeitsschicht
3    Schachtgerinnensohle
4    Bankett
5    Schachtunterteil
6    Schachtring
7    Blendriegel (Beton)
8    Verstellblende (Edelstahl)
9    Stahlblende selbstreinigend (Edelstahl)
10    Befestigungsschrauben

### 2. Änderung des Überlaufes (Bild 2 und 3)

Die Änderung des Überlaufs beinhaltet zwei mögliche Varianten:

-    Neigung des Überlaufes (Bild 2)
-    Einschnitt des Überlaufes (Bild 3)

Durch diese Maßnahme soll der Überlauf gezielt am vorderen Bereich der Blende konzentriert stattfinden.

### 3. Schrägstellung der Bremse (Bild 4)

Die Bremse kann wahlweise auch gegen die Fließrichtung geneigt eingebaut werden.
Durch diese Maßnahme werden die Turbulenzen, die bei einem möglichen Überlauf auftreten, minimiert und dadurch hydraulisch günstigere Abflußbedingungen geschaffen (z.B. geringerer Lufteintrag in untenliegende Haltung).
Das auf der Rückseite der Bremse abfließende Wasser bewirkt zusätzlich eine Verbesserung der Freispülwirkung im Falle einer Verlegung bzw. Verstopfung der Abflußöffnung.

### 4. Stausturzschacht (Bild 5)

Beim Entwurf von Kanalsträngen werden in manchen Fällen Sohlsprünge (Abstürze) aus wirtschaftlichen und hydraulischen Gründen erforderlich.

Soll an diesen Stellen zusätzlich die Abflußbremse eingesetzt werden ist die Ausbildung eines sogenannten Stausturzschachtes erforderlich.

Der Stausturzschacht wird aus einem herkömmlichen Fertigteilschacht hergestellt, in den zur Ausbildung des Absturzgerinnes Profilbeton eingebracht wird.

Der Blendriegel wird auf der entsprechenden Höhe an der Schachtwand befestigt und ermöglicht somit einen Aufstau vor der Absturzkante.

### 5. Spindel zur Einstellung der Abflußöffnung (Bild 6)

Das Anbringen einer Spindel an der Abflußbremse ermöglicht die stufenlose Einstellung der Abflußöffnung.

Mit Hilfe der Spindel läßt sich die Regulierung der Abflußöffnung nun auch von außerhalb des Drosselbauwerkes durchführen, so daß ein Einstieg in das entsprechende Bauwerk nicht mehr zur Notwendigkeit wird.

Die Bedienung der Spindel wird dabei über eine Schieberkappe von der Geländeoberkante des Bauwerkes durchgeführt.

Die Spindel besteht aus einer Gewindestange, die über ein an der Schachtwand befestigtes Führungsgewinde eine Verstellung der Abflußöffnung ermöglicht.

### 6. Mehrteiligkeit (Bild 7 und 8)

Im Falle einer Nachrüstung von bestehenden Kanalabschnitten können die Abmessungen der Abflußbremse den Durchmesser der Schachtöffnungen übersteigen.

Aus diesem Grund wird die Abflußbremse mehrteilig angefertigt, so daß sie in den Schächten zusammengesetzt und befestigt werden kann.

Zur Verbindung der Bremsteile wird auf einen Teil ein Stahlblech wahlweise aufgeschweißt, venietet, veschraubt oder mit einer Steckverbindung angebracht, das mit Hilfe von Verbindungsmitteln mit dem auf dem anderen Teil angebrachten Verbundelement verbunden wird.

### 7. a) Gerade senkrechte Blechform

Die Abflußbremse wird nicht mehr aus rundem Blech angefertigt, sondern erhält eine senkrechte und gerade Blechform.

Vor diesem Bremsteil können nun verschiedene schräge Anströmflächen befestigt werden

- gerade Anströmfläche         (Bild 9)
- runde Anströmfläche         (Bild 10)
- runde vorgezogene Anströmfläche         (Bild 11)
- runde zurückgesetzte Anströmfläche         (Bild 12)

### b) Gerade bzw. runde geneigte Blechform (Bild 13,14)

Anstatt der Rundung wird eine gegen die Fließrichtung geneigte gerade bzw. vorne abgerundete Blechform angefertigt.

### 8. Verfahren (Bild 15, 16, 17)

Bei einem Verfahren mit gebremstem Abfluss wird ein Kanalnetzbereich flächendeckend mit der "Styx" Abflußbremse ausgerüstet.

Die flächendeckende Ausrüstung bewirkt eine optimale Aktivierung der gesamten in diesem Bereich vorhandenen nutzbaren Retentionsvolumina.

Dieses Verfahren kann dabei in seinen Eigenschaften mit einem Schwamm verglichen werden, der das Anfallende Wasser zuerst in sich aufsaugt. Bei einem Regenereignis wird hier ein Großteil der anfallenden Wassermengen in den aktivierten Speicherräumen aufgefangen, zurückgehalten und erst allmählich wieder abgegeben.

Wesentlicher bzw. entscheidender Teil diese Wirkung zu erzielen ist die hintereinander liegende Anordnung von Abflußbremsen. Eine Abflußbremse bzw. vereinzelte Abflußbremsen erzeugen diese Wirkung nicht.

Durch den gebremsten Abfluß wird erreicht, daß Abflußschwankungen zwischen Spitzenabfluß und Normalabfluß (Trockenwetterabfluß) reduziert werden und eine Vergleichsmäßigung des Abflusses erzeugt wird (siehe auch Bericht für Sachsenlandkurier !)

- Zielsetzungen
- Reduktion von Kosten
- Hoher Beitrag an Umweltschutz

### 9. Spülkasten (Bild 18)

Bei den möglichen Bremsenformen wird ein Spülkasten integriert bzw. vorgesetzt.

Bei einem Anstau vor der Bremse findet über eine geeignete Membrane ein Füllvorgang des Spülkastens statt.

Der gefüllte Spülkasten entleert sich selbständig bei nachlassendem Druck und erzeugt dadurch ein Nachspülen des Kanals.

Der Enleerungsvorgang erfolgt verzögert zum Abfluß in den Kanal. Dies wird durch eine Mechanik erzeugt, die den verzögerten Öffnungsvorgang der Verschlußklappe regelt. Nur so kann ein Schwall erzeugt werden!

Nach Entleerung des Spülkastens wird der Verschluß bei erneut steigendem Wasserspiegel verriegelt.

Die Steuerung der Ver- und Entriegelung der Verschlußklappe erfolgt mechanisch oder pneumatisch mit Hilfe von innerhalb oder außerhalb das Spülkastens liegenden Schwimmern.

### 10. Bremse ohne Verstellblende (Bild 19)

Dieses Ausführungbeispiel ist kein Teil der Erfindung.

Die vorgesetzte Verstellblende entfällt bei dieser Form der Bremse. Die Abflußöffnung wird mit den vorher berechneten Abmessungen direkt in die Bremsenteile integriert. Eine nachträgliche Verstellung bzw. Veränderung der Abflußöffnung ist nicht gewollt bzw. vorgesehen.

Die Abrundung der Überlauf- und Durchflußkanten erfolgt zur Verbesserung der Überlauf- und Durchflußleistung. Die hydraulisch günstigste Form wird hierbei erzeugt.

**KOSTENMINDERUNG UND UMWELTSCHUTZ DURCH AKTIVIERUNG VORHANDENER RETENTIONSVOLUMEN INNERHALB VON ABWASSERSYS-TEMEN DER SIEDLUNGSWASSERWIRTSCHAFT MITTELS ABFLUSSBREMSE**

Es folgt eine Beschreibung eines Verfahrens, wobei die erfindungsgemässe Vorrichtung verwendet werden kann.

**Inhaltsverzeichnis**

1. Präambel/Vorwort

2. Entwicklung einer neuen technischen Ausrüstung

3. Anlaß zur Entwicklung

4. Zielsetzungen/Forderungen

  4.1 Minderung der Gewässerbelastung aus Regenüberläufen
  4.2 Reduzierung von Neubaumaßnahmen durch Nutzung bisher ungenutzter Speicher
  4.3 Befestigung von Konfliktpunkten im Netz
  4.4 Minderung der Überflutungshäufigkeit
  4.5 Optimierung des Wirkungsgrades der Kläranlage durch Ausschöpfung der zulässigen Beaufschlagung

5. Lösungen durch Abflußsteuerung

6. Anwendung/Projekte

    6.1 Projekt 1
    6.1.1 Aufgabenstellung/Projektziel
    6.1.2 Lösungen und Maßnahmen
    6.1.2.1 Variante 1
    6.1.2.2 Variante 2
    6.1.2.3 Variante 3
    6.1.3 Kosten
    6.2. Projekt 2
    6.2.1 Aufgabenstellung/Projektziel
    6.2.2 Lösungen und Maßnahmen

7. Bedeutung der Neuentwicklung

    7.1 Für den Umweltschutz
    7.2 Für die Kommunen (Besteller)

8. Fazit

**Kostenminderung und Umweltschutz durch Aktivierung vorhandener Retentionsvolumen innerhalb von Abwassersystemen der Siedlungswasserwirtschaft mittels Abflußbremse**

1. Präambel/Vorwort

Eine Neuentwicklung wird sich in den kommenden Jahren bekanntmachen, nämlich das Verfahren des "Styx" gebremsten Abflusses. Mit dem Einsatz dieses nach dem Fluß der Unterwelt in der griechischen Mythologie benannten Verfahrens, sollen je noch Problem- und Aufgabenstellung hohe Ziele erreicht werden. Neben den selbstverständlichen Zielen des integrierten Umweltschutzes, wie Vermeidung bzw. Reduktion von Überflutungen sowie Schmutzeintrag in Flüsse und Bäche werden Kosten bei Kanalnetzumbau, -sanierung und - erweiterung sowie bei Regenbecken eingespart.

Praktische Beispiele machen den Erfolg des Verfahrens deutlich. Weitere Anwendung ist in Vorbereitung, wobei wissenschaftliche Begleitung erfolgt, um alle Vorteile auch im Rahmen von Vergleichsmessungen und -rechnungen darstellen zu können.

2. Entwicklung einer neuen technischen Ausrüstung

Abflußsteuerung zur Erreichung eines gebremsten bzw. gedrosselten Abflusses läßt sich bekanntlich mit technischer Ausrüstung erzeugen. Hierfür stehen Instrumente der Meß-, Regel-, Steuer- und Fernwirktechnik sowie einfache maschinelle technische Ausrüstungen zur Verfügung. Dazu gehören auch die auf dem Markt befindlichen Drosselorgane. Bei genauer Betrachtung entstehen bei Anwendung der allgemein bekannten Drosselorgane unterschiedliche Ergebnisse, einerseits was den Wirkungsgrad und andererseits das Preis-Leistungs-Verhältnis betrifft.

Gewünscht wird eine Bremse in Form eines Drosselorgans, das preiswert, einfach, funktionsfähig und betriebssicher arbeitet. Hinzu kommt, daß durch Einsatz dieses Organs die Leistungsfähigkeit des Kanalnetzes nicht beeinträchtigt werden darf.

Ein solches Organ stellt die erfindungsgemässe Vorrichtung (Abflußbremse "Styx") dar, die wie folgt beschrieben wird:

Die Bremse besteht aus einem feststehenden rundgeformten Teil, das aus Kunststoff oder rostfreiem Stahl oder gar aus Beton sein kann. Vor diesem feststehenden Element wird ein in das Schachtgerinne hineinragender beweglicher Teil so eingebaut, daß in der Regel der Trockenwetterabfluß ungehindert bzw. uneingestaut abfließen kann.

Je nach Durchmesser des Kanales kann es wünschenswert sein, wenn die Berechnung eine Durchflußöffnung ermöglicht, die bei kritischer Regenabflußmenge von $q_{krit}$ = 15 - 30 l/s x ha bereits einen Einstau bewirkt. Denkbar ist auch in anderen Fällen, daß bereits bei mehr Wasseranfall als den Trockenwetterabfluß eine Abflußverzögerung durch Rückstau einsetzt.

Bei steigender Stauspiegellage erhöht sich der Durchfluß an der Sohlöffnung nach Formel

$$Q = \mu \times A \times \quad \sqrt{2\,gh}$$

Bei rechnerisch konstanter Stauspiegellage soll die Wassermenge durch die Öffnung hindurchfließen, die in der Regel als Freispiegelabfluß errechnet wird also $Q_{max}$. Insofern erfolgt rechnerisch ein Zusammenspiel zwischen Öffnung an der Sohle und Stauspiegellage am Blendüberlauf. Damit ist garantiert, daß die Leistungsfähigkeit des Kanalstranges nicht beeinträchtigt wird.

Natürlich ist es im Ermessen des Planers diese Stauspiegellage variabel so einzustellen, wie er dies nach Sichtung der Bestandsunterlagen und entsprechend dem Zustand des Kanales für richtig und notwendig hält.

Die Überlaufschwelle ermöglicht jederzeit im Notfall einen Überlauf, so daß keineswegs ein gefährlicher Rückstau im Kanalnetz erzeugt werden kann. Im Regelfall wird eine solche Verstopfung jedoch ausgeschlossen, da durch die Rundung der Vorderkante sofort sperriges Material zur Seite getrieben wird.

Im Rahmen einer Kostenvergleichsrechnung konnte ermittelt werden, daß über den Weg der Abflußbremse erzeugtes anrechenbares Kanalvolumen wesentlich preisgünster geschaffen wird, als neues Regenrückhaltevolumen durch Neubau eines Regenüberlaufbeckens.

Im Durchschnitt sind hierbei Kosteneinsparungen von bis zu 70% der Kosten pro Kubikmeter geschaffenen Rückhaltevolumen errechnet worden.

Die Einrichtung kann in einem bestehenden Schacht untergebracht werden, so daß keinerlei Einschränkungen im Bereich des Niederganges oder Bankettes bestehen.

Um das Element in vorhandene Schächte einbringen zu können, muß es mehrteilig durch die relativ schmale Öffnung des Schachteinstiegs eingebracht werden. Die Verwendung der Abflußbremse "Styx" in neuen Schächten ist wesentlich einfacher, da in der Regel über den Weg der traditionellen Herstellung eine preisgünstige Ausführung erzielt wird.

Das Ergebnis läßt sich über die nun neu errechnete Abflußganglinie im Vergleich der Ganglinie ohne Einstau deutlich machen.

Sowohl eine Reduktion in der Abflußspitze als auch eine Vergleichmäßigung des Abflusses läßt sich anhand des Ganglinienverlaufes problemlos nachweisen. In verschiedenen Fällen wurde der Spitzenabfluß sogar um annähernd 2/3 des Normalabflusses reduziert.

**3. Anlaß zur Entwicklung**

Das Thema
  **"Aktivierung vorhandener Retentionsvolumen"**
wird schon so lange diskutiert, wie es Kanalnetze gibt.

Dieses Thema besitzt heute höchste Aktualität. Der Ruf nach Erarbeitung von alternativen kostengünstigen Lösungen bei der Koordinierung und Optimierung des Kanalabflußtransportes in Ergänzung zu den bisherigen Praktiken ist unüberhörbar.

Es gibt gute Gründe die bisherigen Formen der Abwasserableitung zu überdenken. Dies haben Untersuchungen und praktische Erfahrungen gezeigt.

Kanalisationen sind von einem außerordentlich diskontinuierlichen Eintrag geprägt, der die Betriebsabläufe großenteils unberechenbar macht. Dem Planer bleibt daher nur der Weg, auf der Grundlage der Bemessungsrichtlinien aus Spitzenniederschlägen Kapazitäten vorzusehen, die in der Lage sind, auch solche größere Niederschlagsmengen aufzunehmen.

Deutlich wird hierbei, daß diese Kapazitäten bei Normalbetrieb riesige Volumenreserven beinhalten, die bisher infolge fehlender geeigneter technischer Ausrüstung nicht optimal genutzt werden konnten. - Dies kann man jetzt ändern.

Das Thema aufzugreifen hatte zwei Hintergründe:

1. Die Kommunen sind aufgrund fehlender Mittel nur noch mit Mühe in der Lage, ihre bisherigen Auflagen bzw. Aufgaben zur Regenwasserbehandlung ernsthaft umzusetzen.

2. Die bisherigen Möglichkeiten des Gewässerschutzes sind mit den vorhandenen Methoden nur sehr kostenintensiv über den Weg der Abflußsteuerung durch EDV-gestützte Meß-, Regel- und Fernwirktechnik und teuren Regenbecken zu erreichen. Mittel hierfür stehen kaum mehr in ausreichendem Maße zur Verfügung. Preisgünstige Lösungen sind gefragt.

### 4. Zielsetzungen / Forderungen

#### 4.1 Minderung der Gewässerbelastung aus Regenüberläufen

Die Einleitung von Spitzenregenabflußmengen und damit auch Schmutzfracht, die über die Regenüberläufe in die Gewässer erfolgt, soll auf ein Minimum reduziert und an die Belastung des jeweiligen Vorfluters angepaßt werden. Hierdurch kann auch ökologischer "Streß" in Vorflutern reduziert werden.

Die bisherigen Maßnahmen wie Bau von Regenüberlaufbecken und Staukanälen entsprachen zwar den Forderungen nach den Richtlinien, konnten aber nicht alle Belastungsfälle gerade bei hintereinander geschalteten Regenüberläufen berücksichtigen. Hier wäre die Reduktion des Spitzenabflußtransportes von bedeutender Auswirkung.

#### 4.2 Reduzierung von Neumaßnahmen durch Nutzung bisher ungenutzter Speicher

Ein Kanalsystem das aufgrund seiner an die Bemessungsrichtlinien angepaßten Dimensionierung über Transportkapazitiäten verfügt, die im Jahr nur wenige Male, nämlich ca. 5 - 10% genutzt werden, birgt riesige Volumenreserven in sich, die bisher ungenutzt waren. Da im Sinne der Richtlinien für die Bemessung und Gestaltung von Regenentlastungsanlagen in Mischwasserkanälen ATV A 128 die Anrechenbarkeit solcher Speicherräume zulässig ist, kann bei geschickter Nutzung dieser vorhandenen Retentionsvolumen eine Redimensionierung der bisher geplanten Regenbecken erfolgen und auf ein Mindestmaß reduziert werden.

Gerade bei unbewirtschafteten und ungesteuerten Kanalsystemen wird deutlich, daß dort die vorhandenen Speicherkapazitäten zwangsläufig ungenutzt bleiben müssen.

#### 4.3 Beseitigung von Konfliktpunkten im Kanalnetz

Durch Konzentration des Mischwasserabflusses entstehen im Kanalnetz Konfliktpunkte an topographisch schwierigen Zwangspunkten bzw. Tiefpunkten, so daß sich dort unangenehme Rückstaus in Verbindung mit Folgeschäden ergeben. Begünstigt werden solche Ereignisse durch hydraulisch ungünstig ausgebildete Verknüpfungs- bzw. Vereinigungsbauwerke.

Meistens stehen dabei gleichzeitig an anderer Stelle freie Kanalräume ungenutzt zur Verfügung.

#### 4.4 Minderung der Überflutungshäufigkeit an Vorflutern

Stellen wir uns einen sensiblen Bach mit geringer Normalabflußmenge vor, der durch stoßweise Belastung infolge der Einleitung von Abwasser aus Regen- bzw. Mischkanalisationen permanent aus dem ökologischen Gleichgewicht gerät und einem ständigen ökologischen Streß unterzogen ist. Hinzu kommt, daß durch diese Stoßbelastungen Auskolkungen bzw. Erosionen und Überflutungen mit Schadensfolge passieren.

Dies geschieht in der Regel nicht an einer einzigen Stelle, sondern stetig auf der gesamten Bach- oder Flußlänge, im Einmündungsbereich in den nächsten Fluß und wieder unterhalb.

Hierbei gehen wir davon aus, daß zum Zeitpunkt der Einleitung in das Gewässer sämtliche vorhandenen Sammler und Speicher ihre Kapazitätsgrenzen erreicht haben. Dies ist in vielen Fällen gerade nicht so.

#### 4.5 Optimierung des Wirkungsgrades der Kläranlage durch Ausschöpfung der zulässigen Beaufschlagung

Kläranlagen sind durch einen diskontinuierlichen Zufluß von Schmutz- bzw. Mischwasser Schwankungen im Betriebsablauf unterzogen, die nur durch entsprechende Reserven in den Becken ausgeglichen werden können. Dadurch sind auch Kapazitäten vorhanden, die nur bei Stoßbelastung ausgeschöpft werden.

Wünschenswert wäre, diese Reserven so optimal zu nutzen, daß ein größerer Teil des verschmutzten Regenwassers als bisher gereinigt werden kann.

### 5. Lösungen durch Abflußsteuerung

Die genannten Ziele lassen sich durch intelligente Abflußsteuerung mittels Bremsorgan im Kanalnetz realisieren. Hierbei soll erreicht werden, daß durch Einsatz eines geeigneten Drosselorganes ohne komplizierte Meß-, Regel- und Fernwirktechnik auf einfache Art dezentral über das gewählte Drosselorgan eine Abflußverzögerung erzeugt wird. Diese hat gleichzeitig zur Folge, daß das Kanalnetz als Retentionskanalnetz genutzt wird und damit die riesigen Volumenreserven zu anrechenbaren Speichervolumen im Sinne der Regenwasserbehandlung umfunktioniert werden können.

Durch diese Maßnahmen werden die anhand des Ganglinienverlaufes nachgewiesenen Spitzenabflußwerte für die unten liegenden Bereiche reduziert und damit die Häufigkeit und Wassermenge beim Eintrag in das Gewässer reduziert werden. Gleichzeitig besteht die Möglichkeit, auf diesem Wege vorhandene Konfliktpunkte durch diese Form der Abflußverzögerung die bereits an den peripheren Bereichen des Kanalnetzes erfolgt, beseitigt werden.

Beispiele haben gezeigt, daß bei geschickter Ausnutzung der vorhandenen Retentionsräume der Zufluß zum Gewässer auf ca. 1/3 des anfallenden Zuflusses aus dem Einzugsgebiet reduziert werden konnte.

Damit wurde insbesondere dem sensiblen Gewässer geholfen, das ja in der Regel einem größeren Gewässer zuströmt. Die hierdurch entstehende Verzögerung im Vorflutbereich wirkt sich gesamthaft regional bis überregional bedeutsam aus.

Eine Abflußverzögerung und damit Vergleichmäßigung des Michwasserablaufes bringt im Zulauf der Kläranlage automatisch eine Reduktion der Stoßbelastungen mit sich. Durch eine Vielzahl von eingesetzten Drosselorganen soll das Kanalnetz wie ein Schwamm wirken, der sich verzögert entleert, was sicher zur Folge hat, daß der Kläranlage mehr Schmutzfracht zugeleitet wird. Diese ist nach unserer Auffassung allerdings bei gleichmäßiger Belastung eher in der Lage diese zusätzliche Beaufschlagung zu verarbeiten, als in Folge der bekannten Spitzenstoßbelastung.

Hier entsteht ein Beitrag zum Gewässerschutz, da ohne zusätzliche wesentliche Kosten eine optimierte Auslastung der Kläranlage und damit eine Verbesserung ihres Wirkungsgrades erzielt wird.

### 6. Anwendung / Projekte

6.1 Projekt 1

6.1.1 Aufgabenstellung / Projektziel

Im Zuge der Straßenverbreiterung und Schaffung eines Geh- und Radweges entstehen beim Ausbau einer Kreisstraße zusätzlich versiegelte Flächen, die einen erhöhten Regenwasseranfall zur Folge haben. Dieses Regenwasser muß dem nahegelegenen Stadtbach zugeleitet werden. Der Stadtbach ist jedoch als Vorfluter in höchstem Maße als sensibel einzustufen und bereits schon jetzt an verschiedenen Stellen von Überflutungen und Auskolkungen heimgesucht worden. Insofern wird es für die Vorfluter schwer, ohne zusätzliche Ausbaumaßnahmen im Sinne eines naturnahen Gewässerausbaues, der mit hohen Kosten verbunden sein würde, die zusätzlichen Wassermengen aufzunehmen und abzuleiten.

Definitive Aussagen, welche Wassermenge nun diesem Vorfluter Stadtbach gerade noch zugemutet werden kann, konnten zum damaligen Zeitpunkt noch nicht getroffen werden, da ein entsprechendes Gutachten noch nicht vorlag.

Um den dadurch entstehenden Zeitverzug nicht als Behinderung für die geplante Straßenbaumaßnahme in Kauf nehmen zu müssen, wurde ein Vorschlag dahingehend ausgearbeitet, der dem Vorfluter nicht mehr als die bisher ohnehin anfallenden Regenwassermengen zuleitet.

6.1.2 Lösungsansatz und Maßnahmen

Zur Lösung dieses Problems wurden verschiedene Varianten untersucht und gegenübergestellt.

6.1.2.1 Variante 1

sah vor, das anfallende Regenwasser über Straßen- und Muldeneinläufe mittels eines neu zu bauenden Transportkanals in ein am Ende der Ausbaustrecke befindliches Rückhaltebecken einzuleiten und von dort aus dosiert dem Vorfluter zuzuleiten. Diese zunächst plausible Lösung hat jedoch den Nachteil, daß Zuleitungs- und Ableitungsregenwasserkanäle über private Grundstücke verlaufen müssen und sich auch das Regenrückhaltebecken auf privatem Grundstück befinden würde, so daß hier die Frage der Entschädigung, der Unterhaltung bis hin zum möglichen Grunderwerb ggf. auch im Rahmen eines Planfeststellungsverfahrens gelöst werden müßte. Darüber hinaus würde der Ausbau des Beckens aufgrund der bisher gesammelten Erfahrung hohe Kosten verursachen. Diese wurden auf ca. DM 250.000,00 geschätzt.

6.1.2.2 Variante 2

sah den Anschluß das Straßenentwässerungskanales an das innerörtliche Regenwasserkanalnetz vor. Dieses wird jedoch zur Zeit untersucht und die Anschlußmöglichkeit wegen möglicher hydraulischer Überlastungen als fraglich eingestuft, zumal das Problem der Ableitung in den Vorfluter nur von einem zum anderen Zuständigen verlagert wird.

6.1.2.3 Variante 3

sieht vor, den neu zu bauenden Regenwasserkanal in der Planung so zu überarbeiten, daß daraus ein Retentionskanal entsteht. Der Retentionskanal soll die gleichen Eigenschaften besitzen wie ein Rückhaltebecken. Im Gegensatz hierzu ist allerdings die Einleitung in den Vorfluter an zwei Stellen angebracht.

Damit das Retentionsvolumen tatsächlich auch erzeugt wird, ist angesichts des relativ steilen Geländeverlaufes eine Abtreppung des Kanalstranges erforderlich. Somit erhalten wir Zulaufstrecken, die dem Geländeverlauf angepaßt sind und Stränge, die mit etwas größerem Durchmesser flachgelegt und kaskadenförmig angeordnet sind.

Ferner ist der Einbau einer technischen Einrichtung, nämlich der neu entwickelten Kanalstaublende erforderlich. Würde diese Blende nicht eingesetzt werden, ergebe sich keine Abflußverzögerung und damit keine Ausnutzung des nutzbaren Kanalstauvolumens. Durch den Einbau der Blende wird das anfallende Regenwasser zurückgehalten und nur eine Menge von 14 l/s aus insgesamt anfallenden 39 l/s weitergeleitet. Die dadurch entstehende Abflußverzögerung erzeugt eine Vergleichmäßigung des Abflusses und gleichzeng einer Abbau des Spitzenabflusses.

Um die Kaskaden angesichts des doch steilen Geländeverlaufes zu erzeugen, sind Absturzschächte vorgesehen, die den Einbau der Staublende ermöglichen.

Die Blende besteht aus einem feststehenden, rund geformten Teil und kann aus Kunststoff, rostfreiem Stahl oder aus Beton sein. Vor diesem feststehenden Element wird ein in das Schachtgerinne hineinragender beweglicher Teil so eingebaut, daß ein gewisser Mindestquerschnitt erhalten bleibt. Somit können gering anfallende Ragenwassermengen problemlos und ohne Einstau abgeleitet werden.

Bei zunehmendem Regenwasseranfall und steigender Stauspiegellage erhöht sich der Durchfluß an der Öffnung, so daß bei rechnerisch konstanter Stauspiegellage die Wassermenge durch die Öffnung durchgeht, die in der Regel als Freispiegelkanalabfluß errechnet wird, also $Q_{max}$.

Die Zeit, welche zur Erreichung der maximalen Stauspiegellage benötigt wird, ist der Zeitrahmen, in welchem sich die Abflußverzögerung einstellt und auch die Phase, in welcher die Nutzung des Stauvolumens erzeugt wird. Weil: Was in dieser Zeit nicht abfließt als gestaut gilt.

Die Überlaufschwelle ermöglicht jederzeit im Notfall einen Überlauf, so daß keinesfalls ein gefährlicher Rückstau im Strang erzeugt wird. In der Regel wird eine solche Verstopfung jedoch ausgeschlossen, da durch die Rundung der Vorderkante sofort sperriges Material zur Seite getrieben wird.

An der Sohle sind entsprechend dem erechneten Durchgang und der jeweiligen unterschiedlichen Stauspiegellage die Durchflußgeschwindigkeiten unterschiedlich. Entstehende Ablagerungen werden bei Normalabfluß sofort wieder abgespült.

6.1.3 Kosten

Die Baukosten für den neu zu bauenden Regenwasserkanal belaufen sich auf DM 294.000,00.

Ohne die Überarbeitung des Projektes als Retentionskanal mit kaskadenförmiger Anordnung sind ursprünglich Kosten in Höhe von DM 169.000,00 ermittelt worden. Dadurch errechnen sich infolge der Nutzung des Kanales als Retentionskanal Mehrkosten in Höhe von DM 125.000,00.

Damit wird deudich, daß die Mehrkosten für die Umnutzung des Kanales als Retentionskanal im Gegensatz zum Ausbau eines Regenrückhaltebeckens um die Hälfte billiger sind.

**6.2 Projekt 2**

6.2.1 Aufgabenstellung / Projektziel

Der vorhandene Kanalstrang war hydraulisch überlastet und aus früherer Zeit zu klein bemessen.

Im Hinblick auf die Entwicklung innerhalb des Einzugsgebietes sowie der Maßgabe zur Umverteilung der Abflüsse infolge überlasteter Nachbarregionen übernimmt der neugeplante Kanal eine besondere Entlastungsfunktion.

Gleichzeitig soll die Gefahr der Überlastung der untenliegenden Bereiche beseitigt bzw. gemindert und die neu zugewiesene Funktion dieses Hauptkanalstranges nicht zu zunehmenden Überstaus und Rückstaus führen. Durch Schaffung von Retentionsvolumen und Ausnutzung desselben, soll Abflußverzögerung erzeugt und gleichzeitig der Spitzenabfluß stark reduziert werden.

6.2.2 Lösungsansätze und Maßnahmen

Für die angegebene Wassermenge wurde unter Zugrundelegung des dort vorhandenen Gefälles ein Querschnitt von DN 800 ausreichen. Damit wäre der Kanalstrang leistungsfähig bemessen.

Im Hinblick auf die besondere Aufgabe und konfliktreiche Lage der untenliegenden Kanalstränge wurde statt DN 800 nun ein Querschnitt DN 1200 zur Optimierung vom Auftraggeber gewünscht.

Im vorhandenen Schacht, der aus Ortsbeton bestehend eine ausreichende Größe besitzt, wurden geringfügige Änderungen vorgenommen. Z.B. eine Betonblende über Überlaufschwelle quer zur Fließrichtung errichtet. Vor diese Schwelle wurde die verstellbare Kanalstaublende eingebracht, durch welche eine Feineinstellung des ermittelten Abflußquerschnittes möglich wird.

Die Gesamtmehrkosten belaufen sich auf ca. DM 35.000,00. Die Kosten für die Staublende und den Betonblendriegel betragen DM 12.000,00. Der Diffenzbetrag von DM 23.000,00 entstand durch die Ouerschnittsvergrößerung das Stahlbetonrohres, der Grabenmehraushub- und Verfüllmengen. Da die Straße ohnehin eneuert werden mußte, entfielen hier Mehrkosten. Damit wurden bei DN 1200 ca. 100 m$^3$ Retentionsvolmmen zu einem Preis von DM 350,00 pro m$^3$ geschaffen. Ohne die Querschnittserhöhung wäre zwar der spezifische Preis pro Kubikmeter geschaffenem Retentionsvolumen bei ca. DM 200,00 pro m$^3$, nämlich DM 12.000,00/61m$^3$ gelegen, jedoch wäre der Nutzen geringer gewesen. Immerhin wurde im Vergleich zu neuen Regenbeckenvolumen mit einem Preis von ca. DM 1.200,00 bis DM 1.500,00 pro Kubikmeter sehr günstig bzw. sparsam gebaut.

## 7. Bedeutung der Neuentwicklung

### 7.1 Für den Umweltschutz

Die durch die in den beschriebenen Projekten erzeugten Maßnahmen erzielte Vergleichmäßigungen des Abflusses und der Abbau des Spitzenabflusses führt dazu, daß der spontane Regenwassereintrag in Gewässer reduziert werden kann und daß unterhalb liegende Regenüberläufe weniger häufig in Bäche und Flüsse entlasten und damit eine Schonung erreicht wird. Gleichzeitig kann durch die Vergleichmäßigung des Abflusses mehr Schmutzfracht zur Kläranlage transportiert werden, die dabei nicht stärker belastet wird, sondern durch die Kontinuität im Zulauf ihre Leistung erhöht.

Durch Reduktion des Spitzenabflusses können Konfliktpunkte in Netzen beseitigt werden, so daß gefährliche Überlastungen reduziert bzw. vermieden werden können und damit auch der Ausfluß in das Gelände bzw. in Keller stark gemindert wird.

### 7.2 Für die Kommunen

Die Kommunen können durch die Schaffung von anrechenbaren Volumen zur Regenwasserbehandlung Zug um Zug ihre Absichten der Regenwasserbehandlung erfüllen, ohne dabei extrem ihren Haushalt zu strapazieren.

Durch die Beseitigung von Konfliktpunkten im Netz sind dort kostenaufwendige Umbau-, Sanierungs- und Erweiterungsmaßnahmen teilweise unnötig oder in ihrem Volumen stark reduziert worden.

Die im Haushaft notwendige Budgetierung für Regenwasserbehandlung ist zu einer überschaubaren Größe geworden.

### 8.Fazit

Das Verfahren zur Erzeugung eines -Styx- gebremsten Abflusses dient der dezentralen, peripheren Abflußsteuerung. Der Einbau kann in vorhandenen oder neu erstellten bzw. neu zu erstellenden Schächten erfolgen.

Das zum Patent angemeldete Verfahren stellt eine preisgünstige Form der Abflußsteuerung bzw. Abflußverzögerung auf mechanischem Wege dar, so daß eine Reihe von Zielsetzungen im Sinne des Gewässerschutzes einerseits und der Kostenersparnis andererseits erreicht werden können.

Der Ganglinienverlauf bei "Styx" gebremstem Abfluß ohne Einschränkung der Leistungsfähigkeit zeigt deutlich den Abbau des Spitzenabflusses und die Verzögerung. Dadurch wird ein hoher Beitrag für den Umweltschutz erzeugt.

Durch Anwendung des Verfahrens erzeugte Stauräume in vorhandenen Kanälen lassen Regenüberlaufbekken redimensionieren und damit hohe Investitionskosten einsparen. Die Schaffung von Retentionsvolumen läßt sich mit bis zu 1/3 der Kosten herstellen die für neue Regenbecken anzusetzen sind.

Gerede im Hinblick auf die daraus resultierenden Einsparungen wird das beschriebene Verfahren eine im zunehmenden Maße favorisierende Rolle einnehmen. Die Verknüpfung mit vorhandenen oder neuen Planungen ist grundsätzlich möglich und wird angestrebt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Fig. 1 eine Draufsicht auf einen Teil einer erfindungsgemässen Vorrichtung zur Aktivierung vorhandener Stauräume sowie zur Abflussverzögerung innerhalb von Abwassersystemen der Siedlungswirtschaft;

Fig. 2 einen Seitenschnitt durch die Vorrichtung gemäss Fig. 1 entlang Linie II-II;

Fig. 3 eine Ansicht der Vorrichtung gemäss Fig. 1 in Fliessrichtung;

Fig. 4 eine Draufsicht auf ein weiteres Ausführungsbeispiel einer Vorrichtung entsprechend Fig. 1;

Fig. 5 einen Seitenschnitt durch die Vorrichtung gemäss Fig. 4 entlang Linie V-V;

Fig. 6 eine Ansicht der Vorrichtung gemäss Fig. 4 in Fliessrichtung des Abwassers;

Fig. 7 eine Draufsicht auf ein weiteres Ausführungsbeispiel einer Vorrichtung entsprechend Fig. 1;

Fig. 8 einen Seitenschnitt durch die Vorrichtung gemäss Fig. 7 entlang Linie VIII-VIII;

Fig. 9 eine Ansicht der Vorrichtung gemäss Fig. 7 in Fliessrichtung des Abwassers;

Fig. 10 eine Ansicht der Vorrichtung ähnlich Fig. 3 mit einer anderen Verstellkeilblende;

Fig. 11 eine Draufsicht auf das Ausführungsbeispiel einer Vorrichtung entsprechend Fig. 7 mit einem sich im Querschnitt reduzierenden Kanalstück;

Fig. 12 einen Querschnitt durch einen erfindungsgemässen Stau-Sturz-Schacht mit eingesetztem Drosselorgan;

Fig. 13 und 14 teilweise dargestellte Draufsichten auf weitere Ausführungsformen von Drosselorganen;

Fig. 15 eine Seitenansicht eines weiteren Ausführungsbeispiels eines Drosselorgans;

Fig. 16 eine Seitenansicht eines weiteren Ausführungsbeispiels eines Drosselorgans mit Spülkasten;

Fig. 17 eine Frontansicht des Drosselorgans gemäss Fig. 16;

Fig. 18 eine Draufsicht auf das Drosselorgan gemäss Fig. 16.

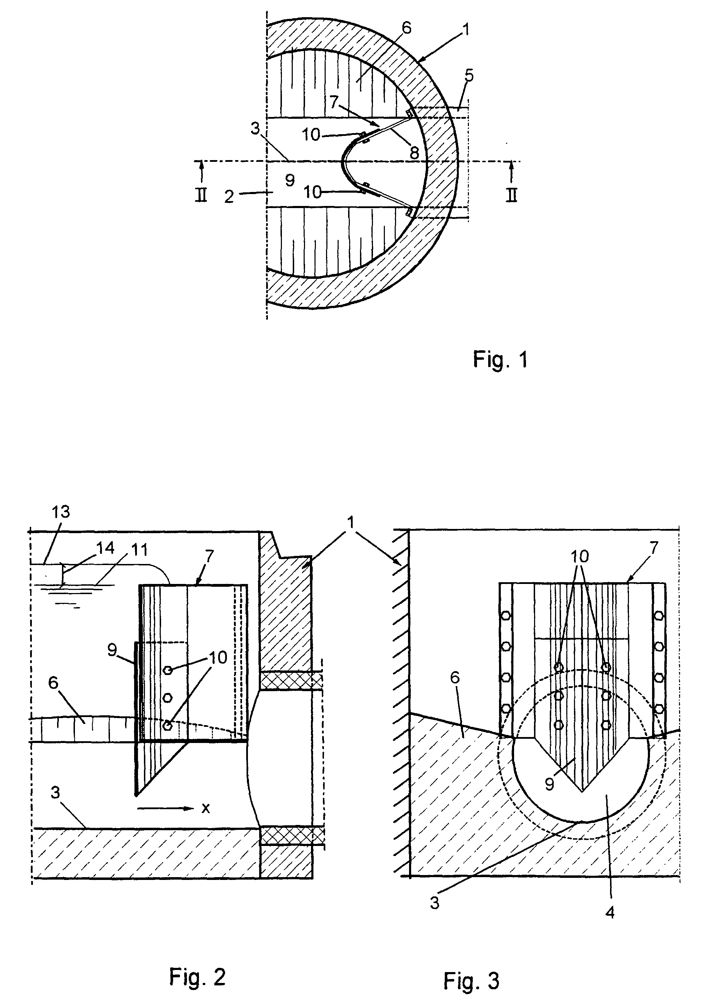

Gemäss Fig. 1 ist von einem Abwassersystem ein Schacht 1 teilweise gezeigt, durch den Abwasser in ein Kanalstück 2 mit einer Schachtgerinnensohle 3 geführt wird. An das Kanalstück 2 schliesst eine Ausflussöffnung 4 (siehe Figur 3) und an diese ein weiterführendes Kanalrohr 5 an.

Dem Kanalstück 2 sind seitlich Bankette 4 schräg aufsteigend zugeordnet. Die Fliessrichtung des Abwassers ist mit dem Pfeil x gekennzeichnet (siehe Fig. 2).

Der Ausflussöffnung 4 ist ein Drosselorgan 7 entgegen der Fliessrichtung x vorgesetzt. Das Drosselorgan 7 besteht aus einer selbstreinigenden Kanalstaublende 8 und einer mit der Kanalstaublende 8 verbundenen Verstellkeilblende 9. Die Verstellkeilblende 9 ist über Befestigungsschrauben 10 mit der Kanalstaublende 8 verbunden und kann in der Höhe verstellt werden.

In Fig. 2 ist zudem gezeigt, dass die Verstellkeilblende 9 und/oder die Kanalstaublende 8 auch geneigt angeordnet werden kann. Dies ist durch die gestrichelte Linie angedeutet.

Eine Neigung der Verstellkeilblende 9 und/oder der Kanalstaublende 8 (d.h., des Drosselorgans 7) bedeutet im übrigen, dass die Länge der Überfallkante beim Wasserüberlauf erhöht ist. Dies verbessert den Spülvorgang, sodass es nach der Überfallkante zu einer besseren Selbstreinigung an der Sohle kommt. Zudem werden durch diese Massnahmen Turbulenzen, die bei einem möglichen Überlauf auftreten, minimiert und dadurch hydraulisch günstigere Abflussbedingungen geschaffen (z.B. geringerer Lufteintrag in untenliegende Haltung).

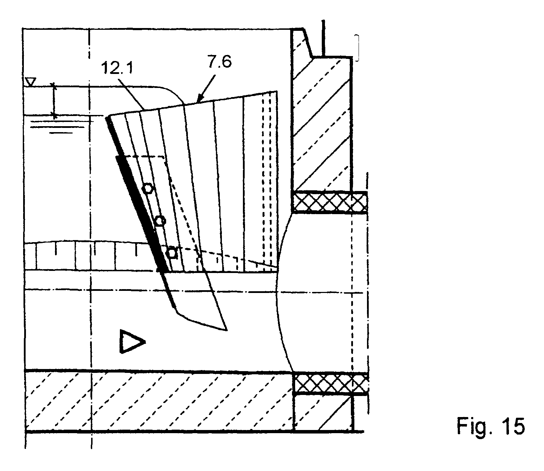

Ein derart geneigtes Drosselorgan 7.6 ist im übrigen in Figur 15 dargestellt. Hierbei neigt sich die Randkante 12.1 entgegen der Fliessrichtung x nach unten.

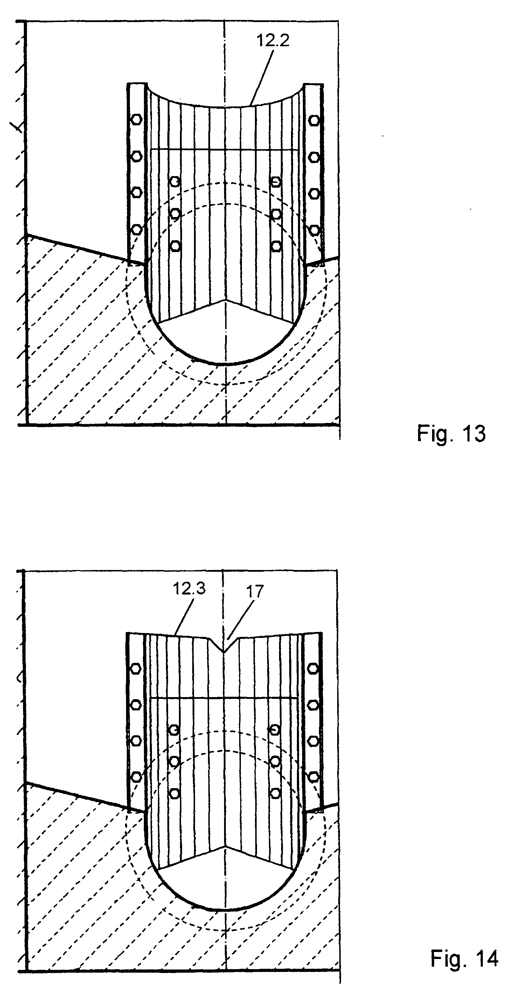

Ähnliches wird gemäss den Figuren 13 und 14 auch dadurch erreicht, dass zwar nicht das gesamte Drosselorgan geneigt ist, dass jedoch gemäss Figur 13 eine Randkante 12.2 entgegen der Fliessrichtung x nach unten geneigt verläuft, oder aber, dass eine Randkante 12.3 einen Einschnitt 17 aufweist. Durch diese Massnahmen soll der Überlauf gezielt am vorderen Bereich des Drosselorgans konzentriert stattfinden.

Die Funktionsweise der vorliegenden Erfindung ist folgende:

Abwasser strömt durch das Kanalstück 2 zu der Ausflussöffnung 4 und durch das Kanalrohr 5. Nimmt das Abwasser zu, so erfolgt durch das Drosselorgan 7 ein Anstauen des Abwassers zurück in das Kanalsystem vor dem Kanalstück 2. Das Anstauen geschieht solange, bis ein Wasserspiegel 11 eine obere Randkante 12 des Drosselorgans 7 erreicht. zwischen dem Wasserspiegel 11 und einem maximalen Wasserspiegel 13 ist ein Wasserüberlauf 14 gegeben, der über die Randkante 12 des Drosselorgans 7 hinter das Drosselorgan 7 läuft und dort wieder in das Kanalstück 2 gelangt.

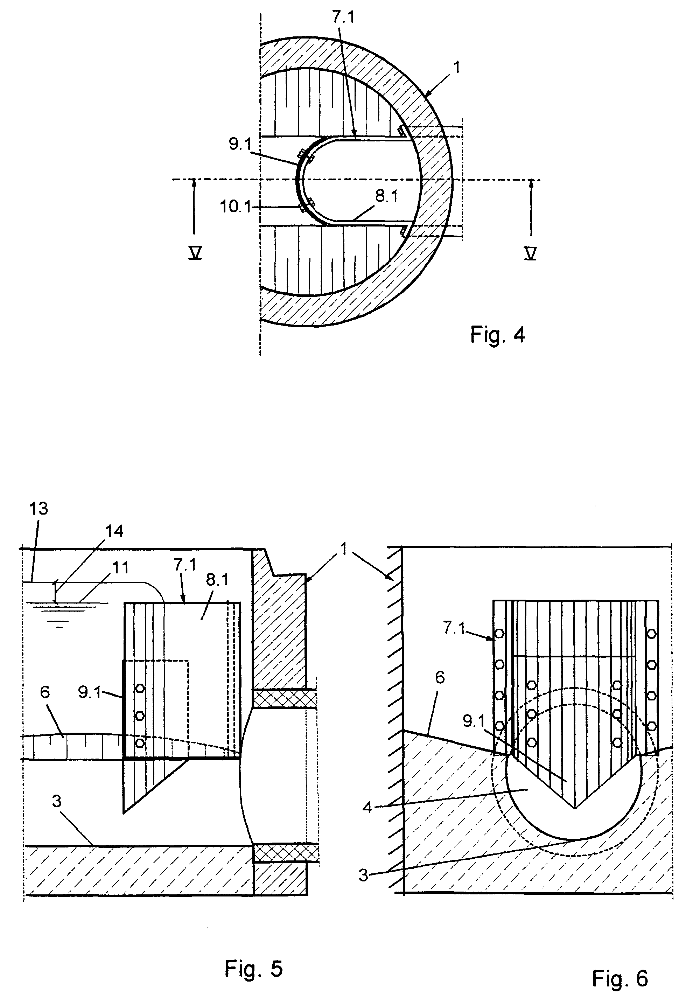

Das Ausführungsbeispiel gemäss den Fig. 4 bis 6 einer Vorrichtung zur Aktivierung vorhandener Stauräume sowie zur Abflussverzögerung innerhalb von Abwassersystemen unterscheidet sich von demjenigen nach den Figuren 1 bis 3 durch eine veränderte Form einer Kanalstaublende 8.1 sowie einer Verstellkeilblende 9.1. Während die Form der Kanalstaublende 8 und der Verstellkeilblende 9 gemäss Fig. 1 mehr keilförmig gegen die Fliessrichtung x ausgerichtet ist, handelt es sich bei der Form gemäss Fig. 4 um eine Halbkreisblende.

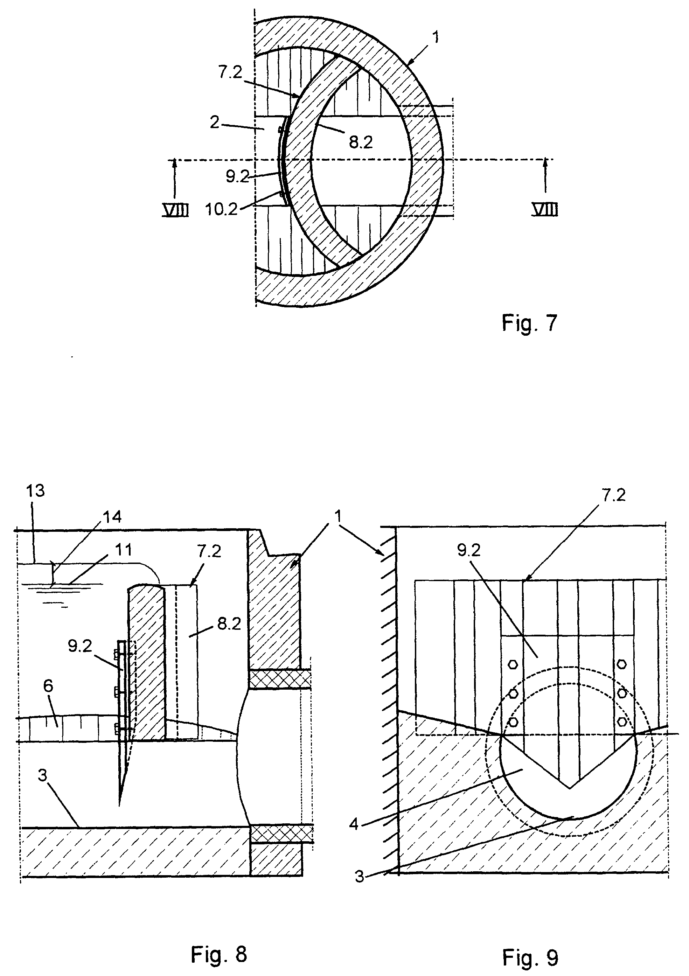

Bei der Vorrichtung zur Aktivierung vorhandener Stauräume sowie zur Abflussverzögerung innerhalb von Abwassersystemen gemäss den Figuren 7 bis 9 ist in dem Schacht 1 als Kanalstaublende 8.2 eine Betonwand eingesetzt, die sich bogenförmig auch über die Bankette 6 erstreckt. Im Bereich des Kanalstücks 2 ist an dieser Kanalstaublende 8.2 eine Verstellkeilblende 9.2 festgelegt, die bspw. aus Blech oder Kunststoff bestehen kann.

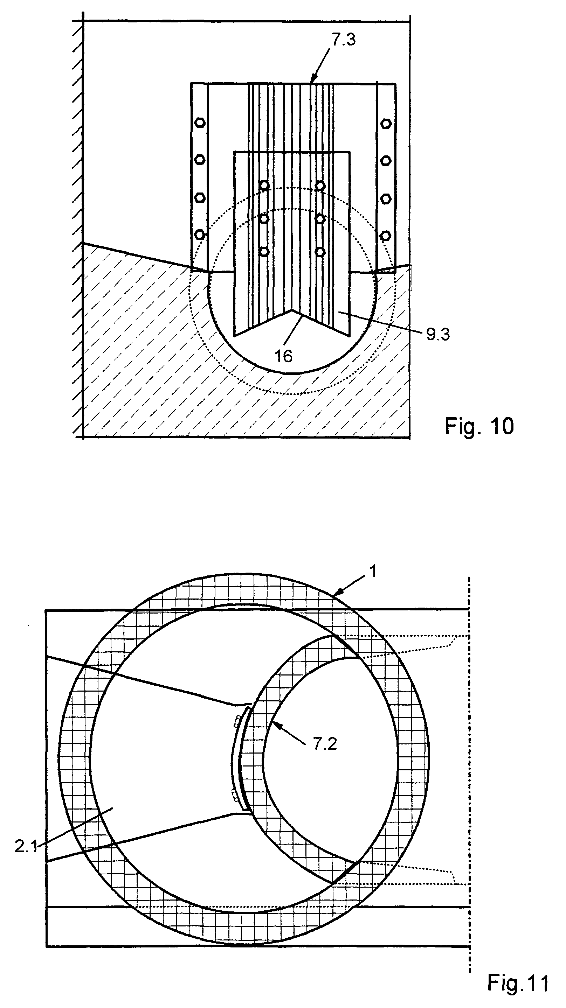

Während die Verstellkeilblenden 9-9.2 nach unten einen Keil 15 aufweisen, der in den Fluss des Abwassers eintaucht, ist gemäss Figur 10 ein dreieckförmiger Ausschnitt 16 in eine Verstellkeilblende 9.3 vorgesehen. Dieser dreieckförmiger Ausschnitt 16 gewährleistet, dass der Trockenwetterabfluss ungehindert und ohne Einstau erfolgen kann.

Ferner wird den im Abwasser enthaltenen Grobstoffen ein ungehinderter Abfluss ermöglicht und durch die Beibehaltung des normalen Abflussesgerinnes werden weniger Turbulenzen erzeugt, die sich wiederum hydraulisch günstiger auf das Abflussverhalten auswirken.

Bevorzugt ist der dreieckförmige Ausschnitt 16 so ausgestaltet, dass er gegenüberliegend der Sohle zusammen mit dieser den von der ATV geforderten freien Kugeldurchgang von 200 mm Durchmesser gewährleistet.

In Figur 11 ist eine Vorrichtung ähnlich Figur 7 gezeigt. Der einzige Unterschied besteht darin, dass das Kanalstück 2.1 nicht einen fortlaufend gleichen Querschnitt aufweist, sondern sich zum Drosselorgan 7.2 hin querschnittlich verjüngt. Dies bedeutet auch bei Trockenwetterabfluss einen höheren Teilfüllungsquerschnitt, der sogar bis annähernd Kreisquerschnitt geht. Dabei wird in diesem Bereich die Fliessgeschwindigkeit des Abwassers erhöht und eine eventuelle Verschmutzung weggespült.

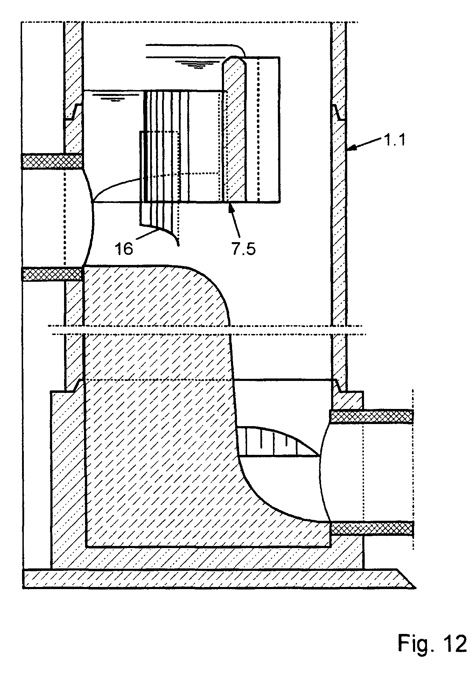

Die vorliegende Erfindung kann auch in einem Stau-Sturz-Schacht 1.1 Anwendung finden, wie er in Figur 12 dargestellt ist. Lediglich beispielhaft ist hier ein Drosselorgan 7.4 angedeutet, welches demjenigen nach den Figuren 7 bis 9 ähnelt, allerdings einen Ausschnitt 16 aufweist. Diese Stau-Sturz-Schächte 1.1 finden vor allem dann Anwendung, wenn Sohlsprünge (Abstürze) aus wirtschaftlichen und/oder hydraulischen Gründen erforderlich sind. Der Stau-Sturz-Schacht wird aus einem herkömmlichen Fertigteilschacht hergestellt, in den zur Ausbildung des Absturzgerinnes Profilbeton eingebracht wird. Das Drosselorgan wird auf der entsprechenden Höhe an der Schachtwand befestigt und ermöglicht somit einen Aufstau vor der Absturzkante.

Bevorzugt, jedoch in Figur 12 nicht gezeigt, soll das Drosselorgan als Abflussbremse mittels bspw. einer Spindel verstellbar sein, so dass eine stufenlose Einstellung der Abflussöffnung ermöglicht wird. Mit Hilfe der genannten Spindel lässt sich die Regulierung der Abflussöffnung auch von ausserhalb des Drosselbauwerkes durchführen, so dass ein Einstieg in das entsprechende Bauwerk nicht mehr zur Notwendigkeit wird. Die Bedienung der Spindel wird dabei über eine Schieberkappe von der Geländeoberkante des Bauwerkes durchgeführt. Bevorzugt besteht die Spindel aus einer Gewindestange, die über ein an der Schachtwand befestigtes Führungsgewinde eine Verstellung der Abflussöffnung ermöglicht.

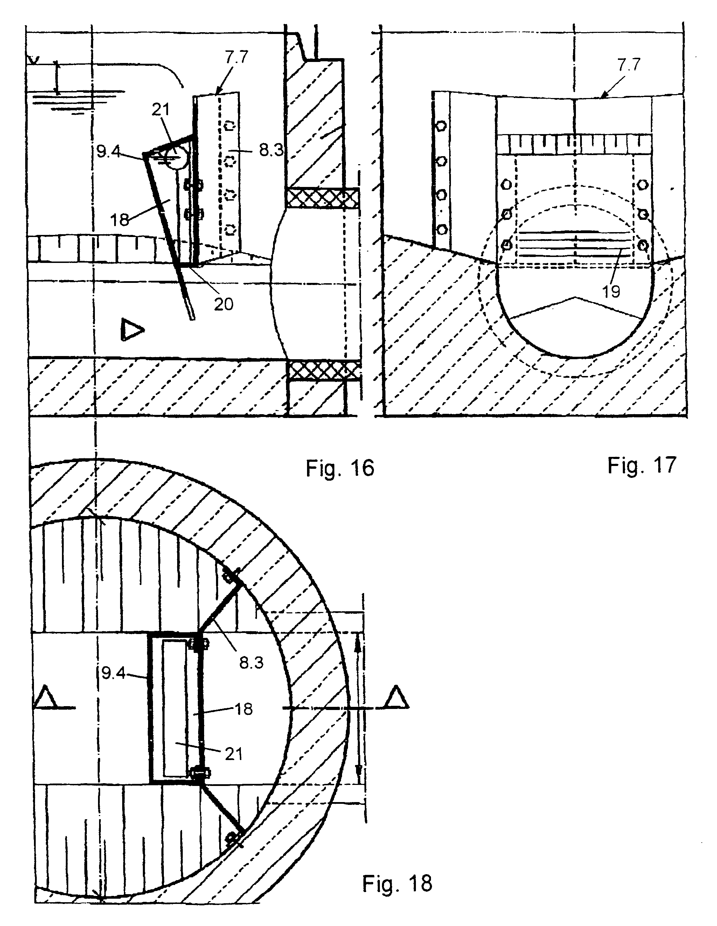

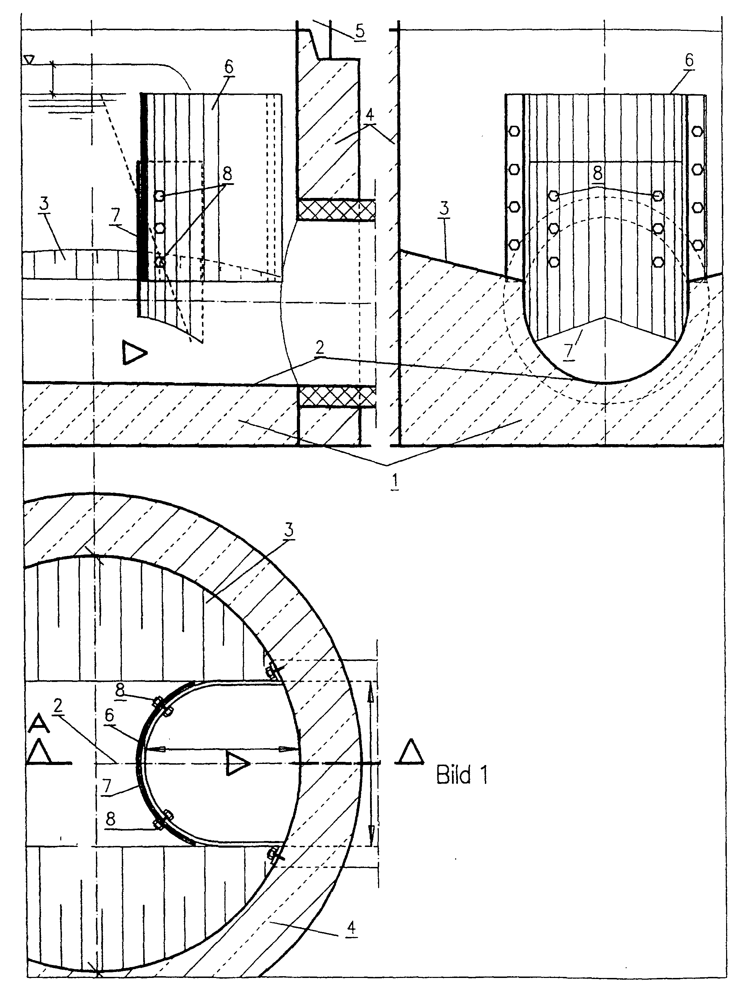

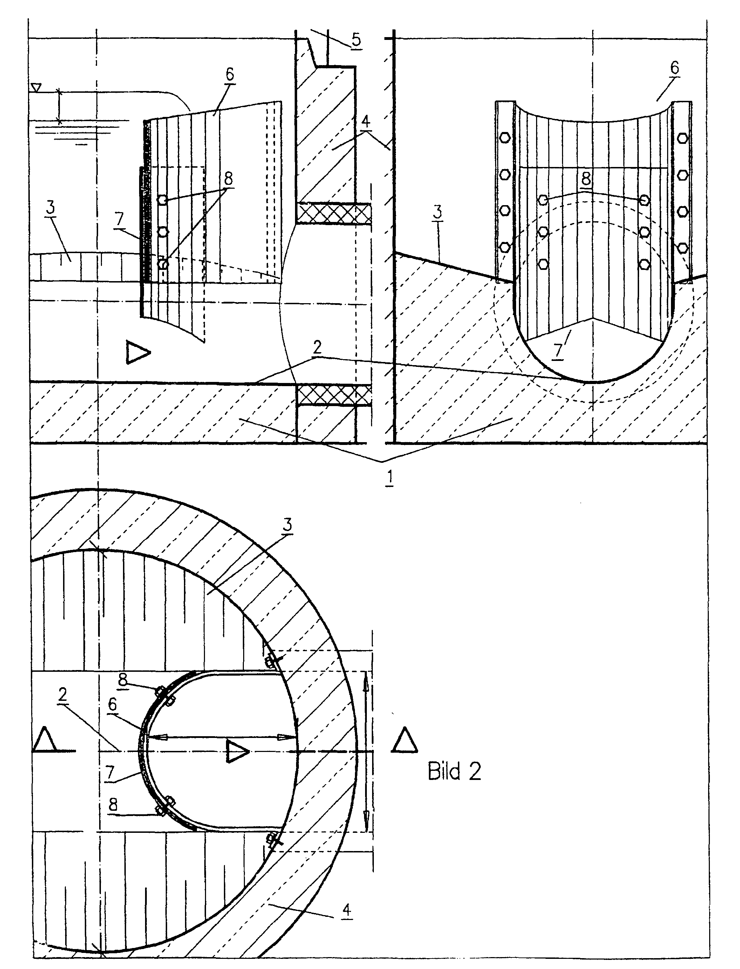

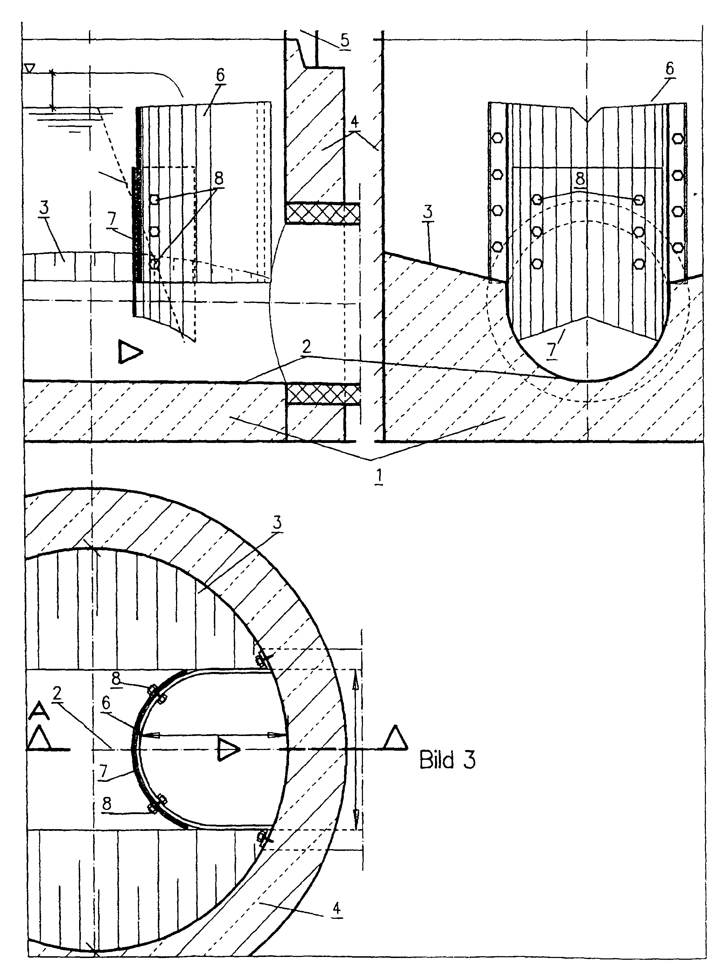

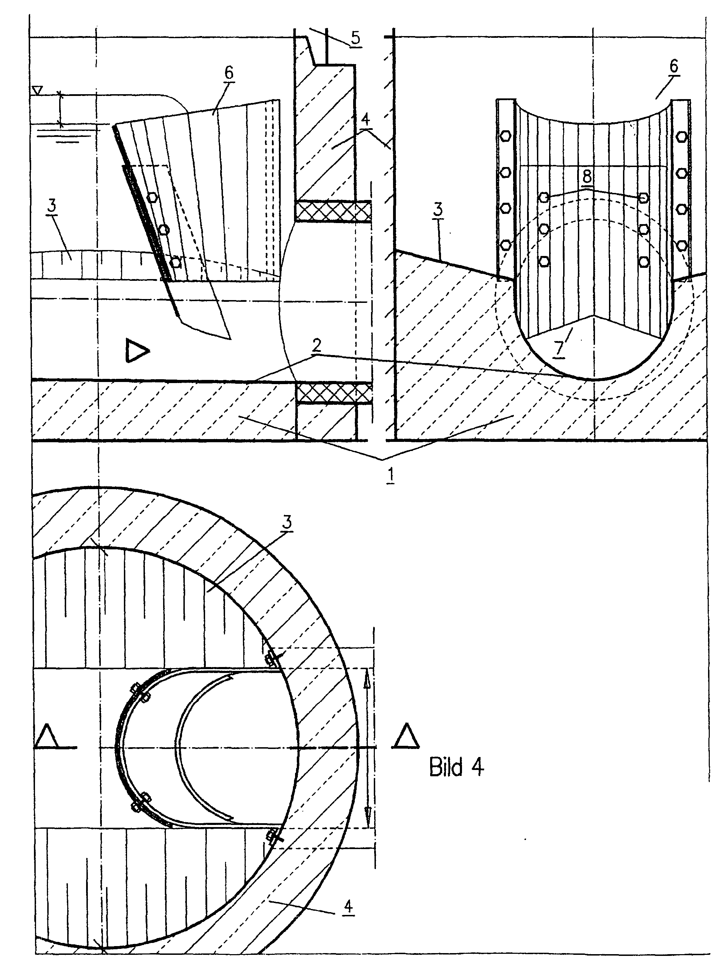

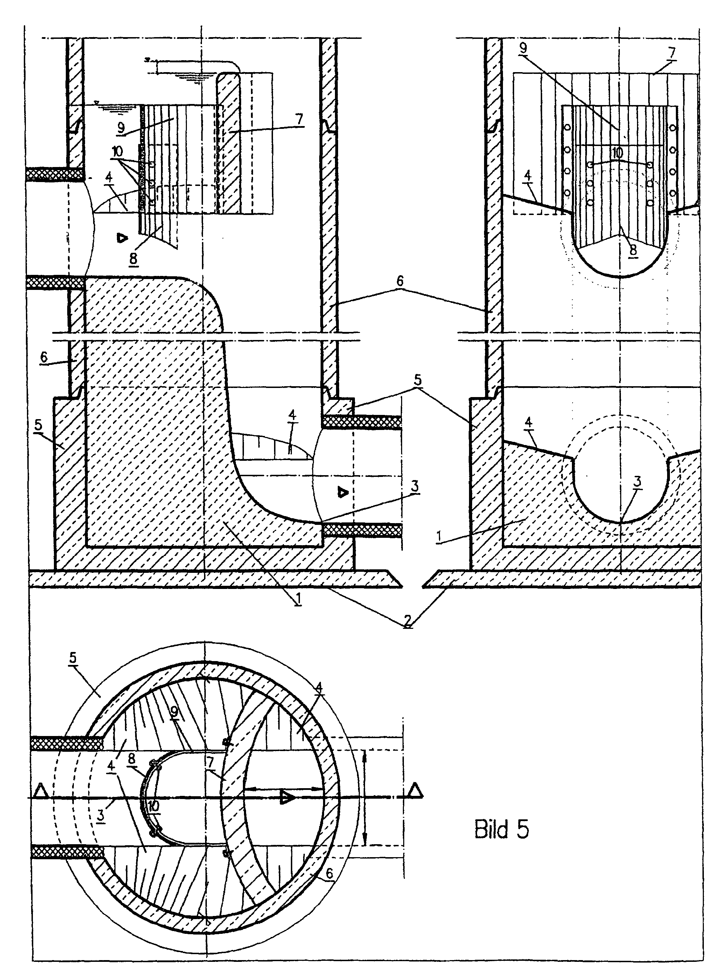

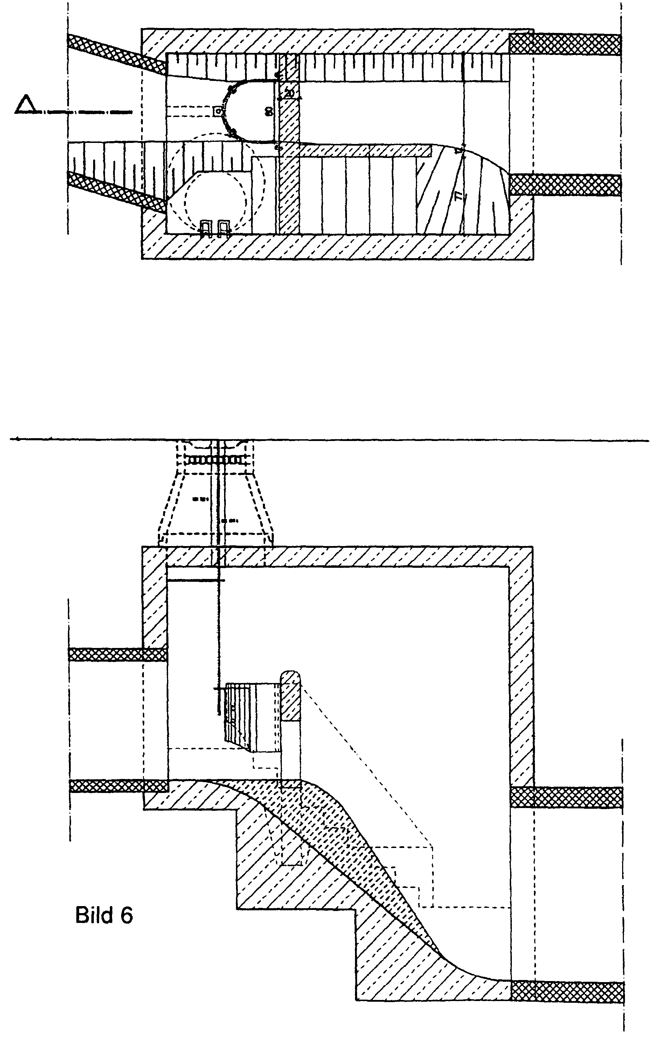

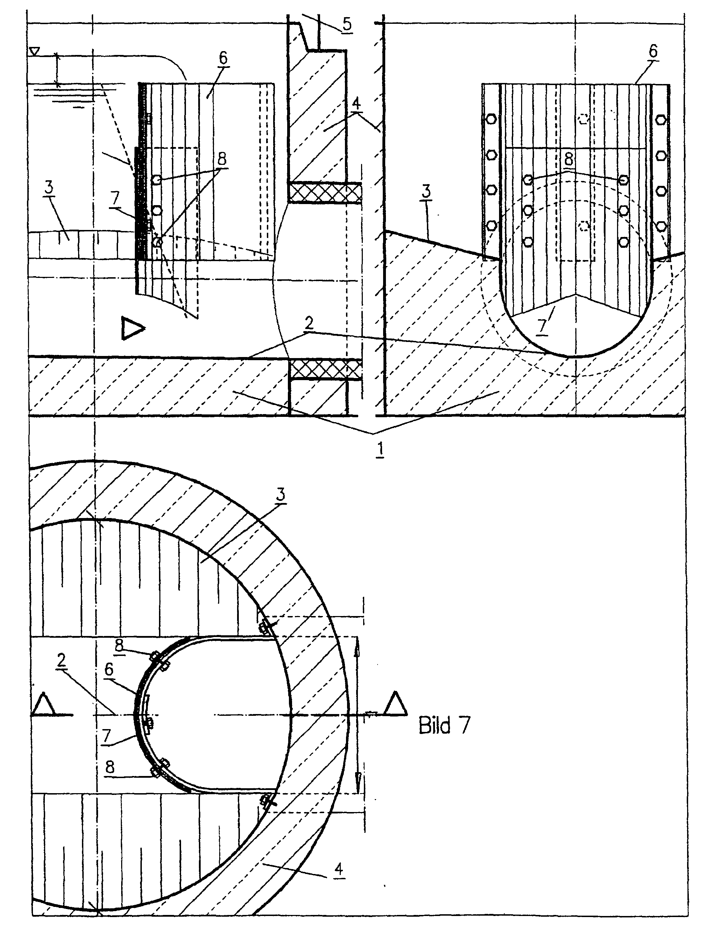

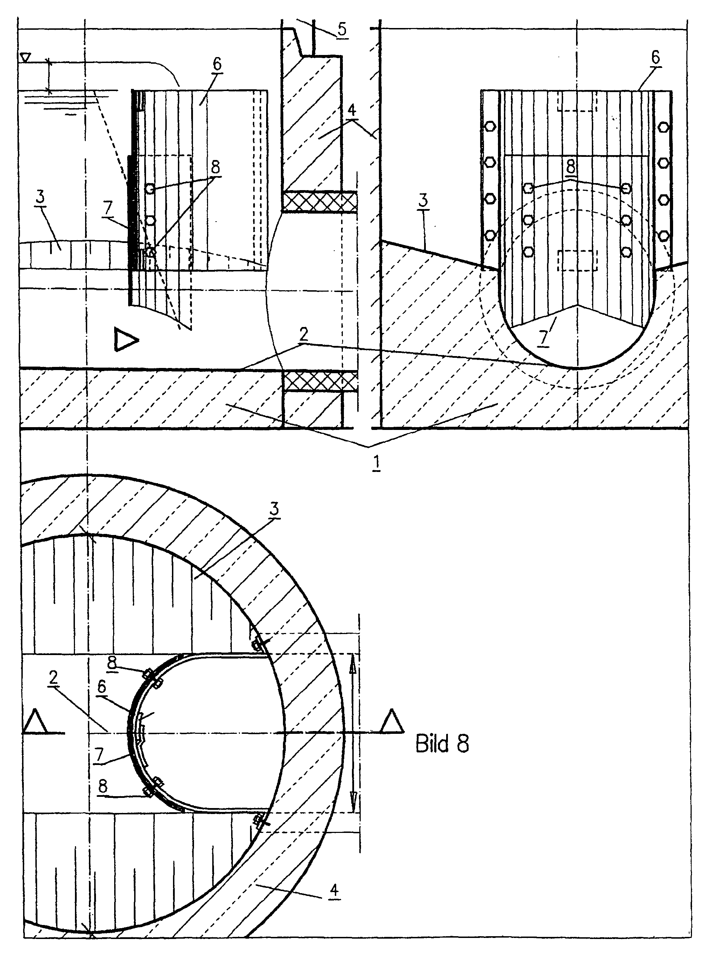

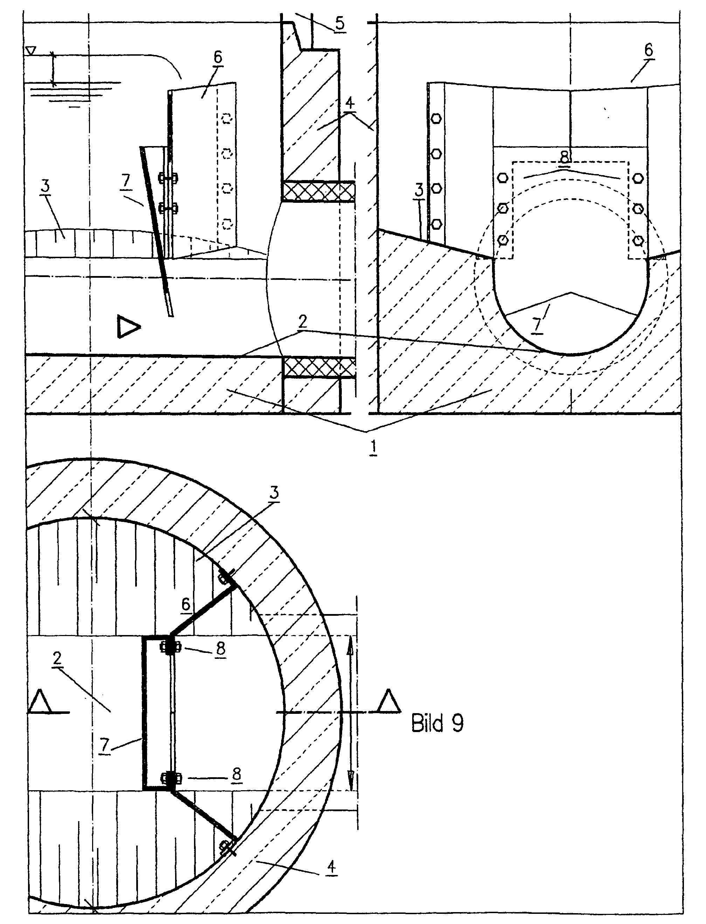

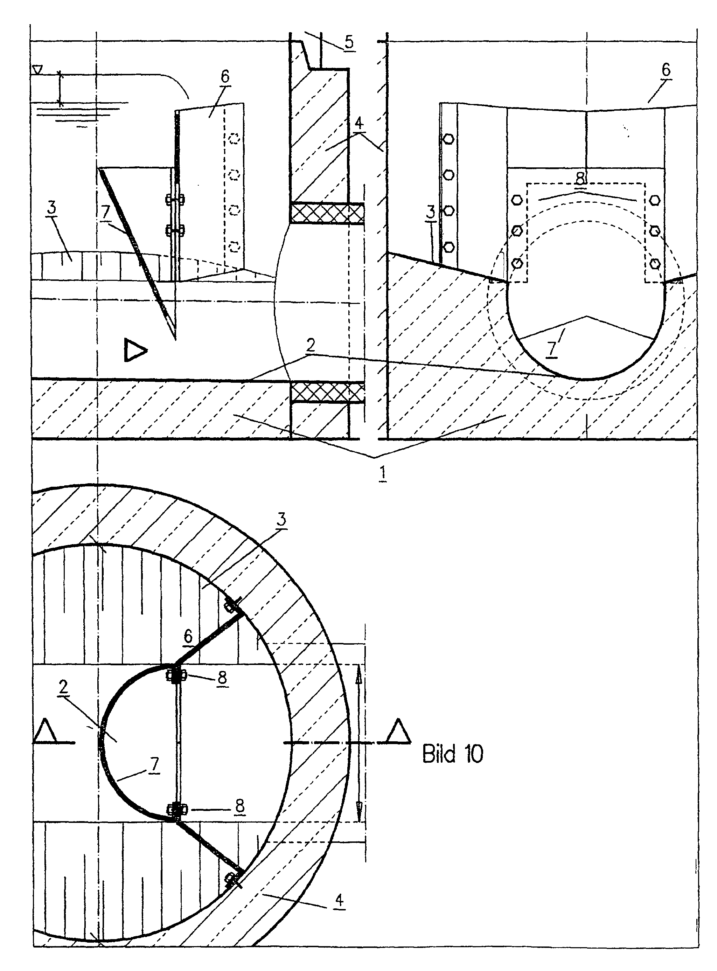

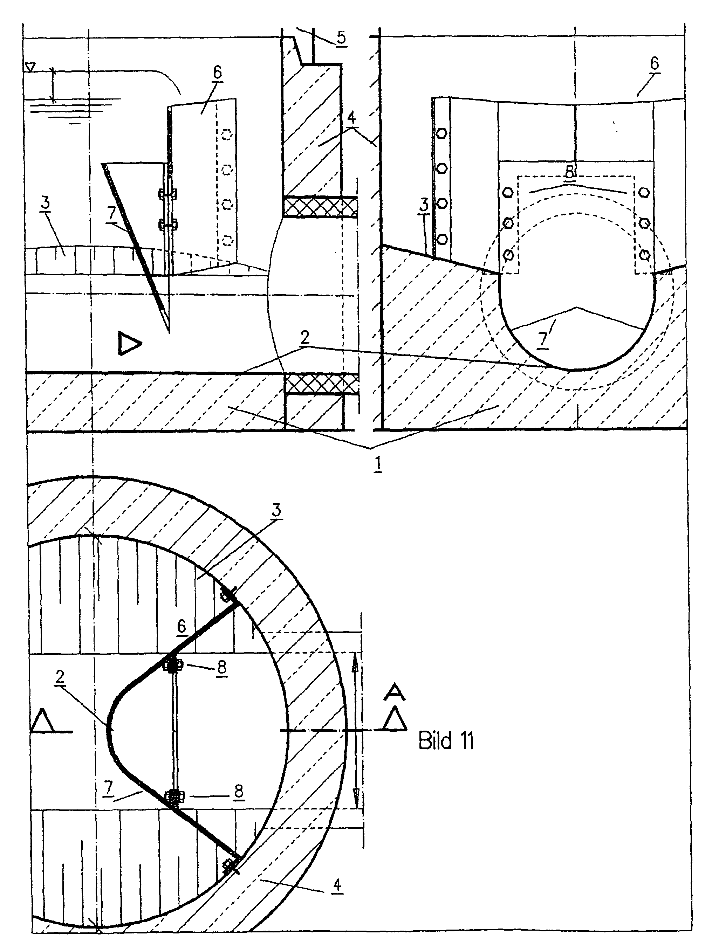

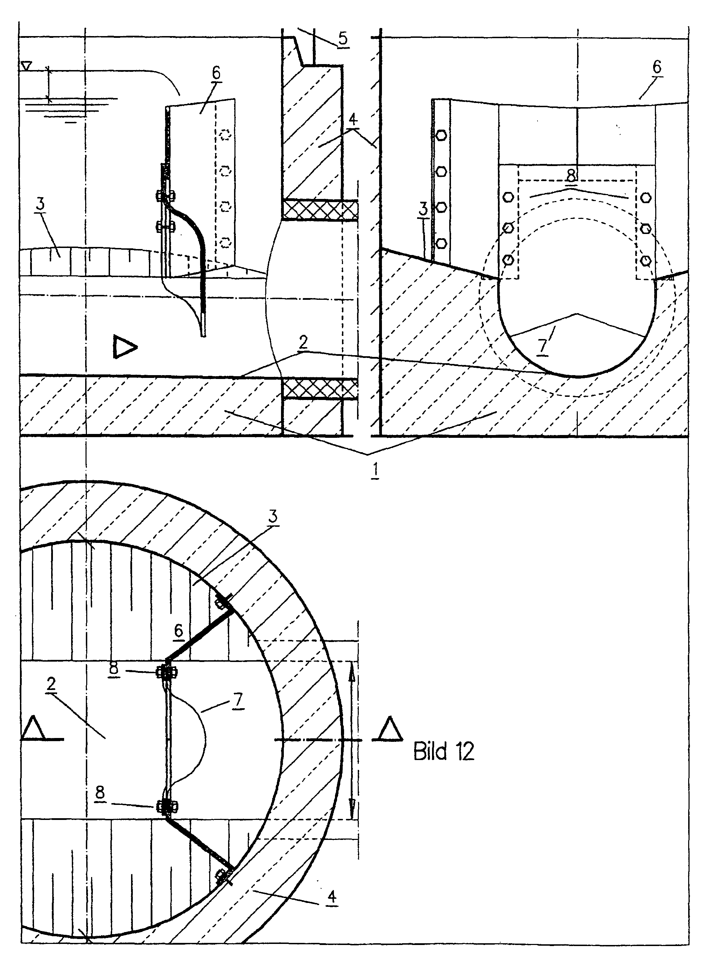

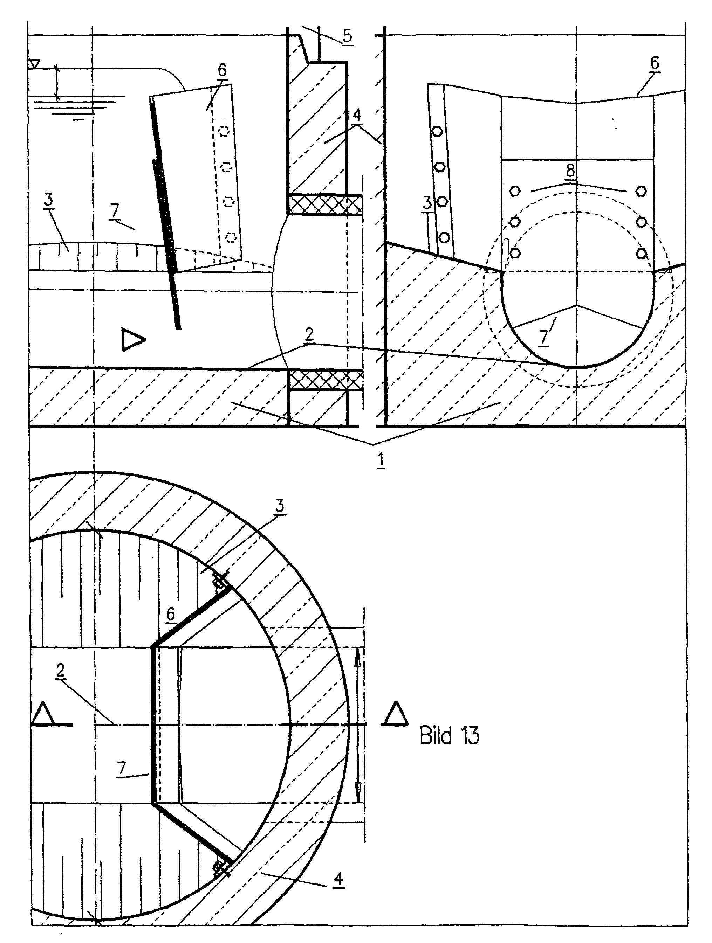

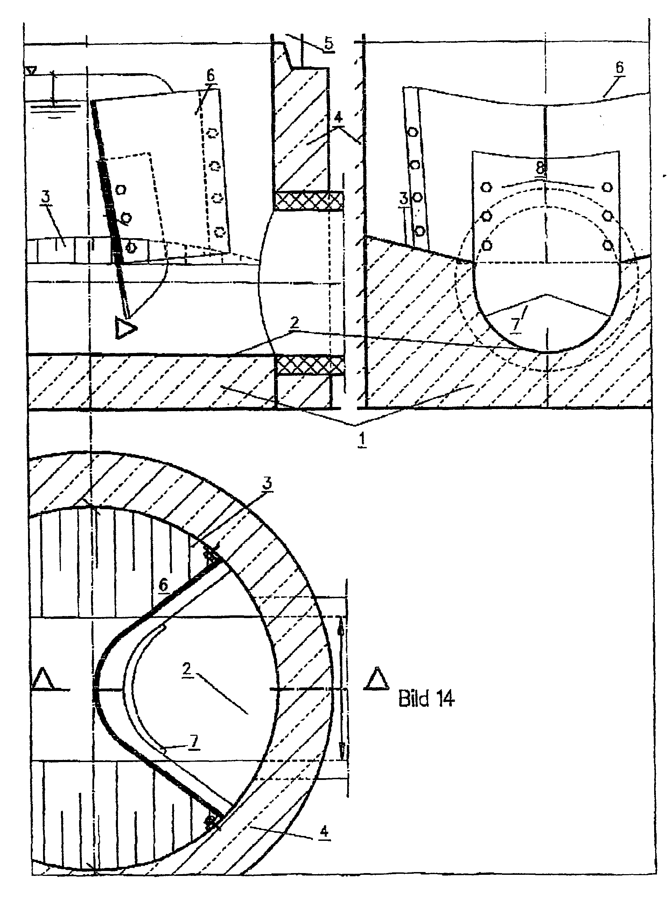

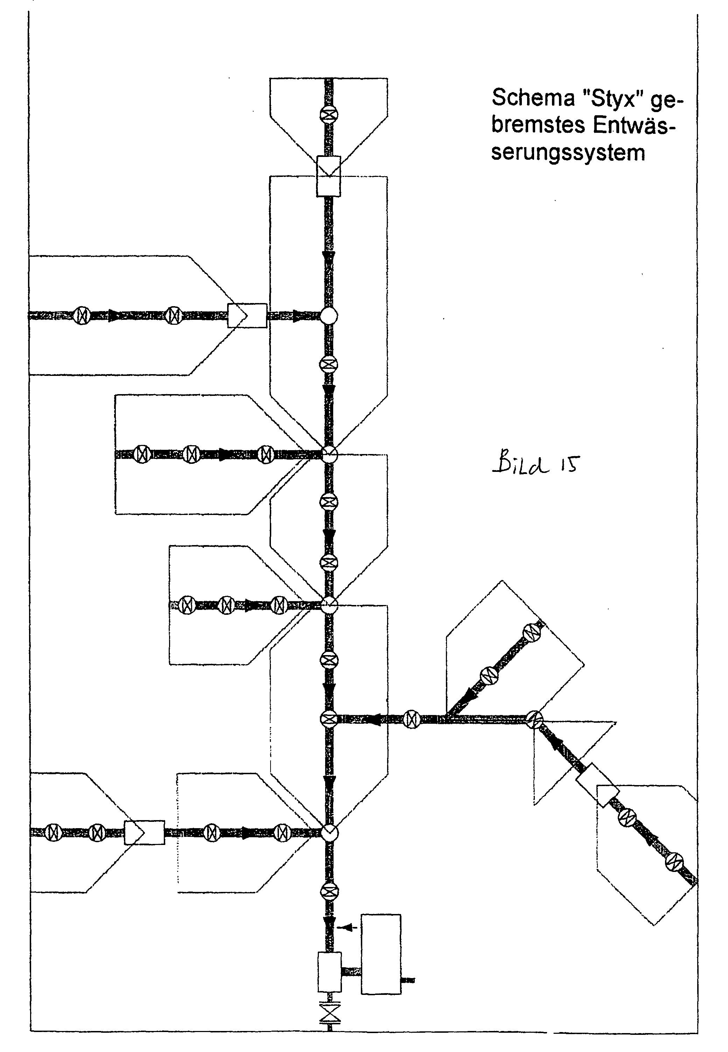

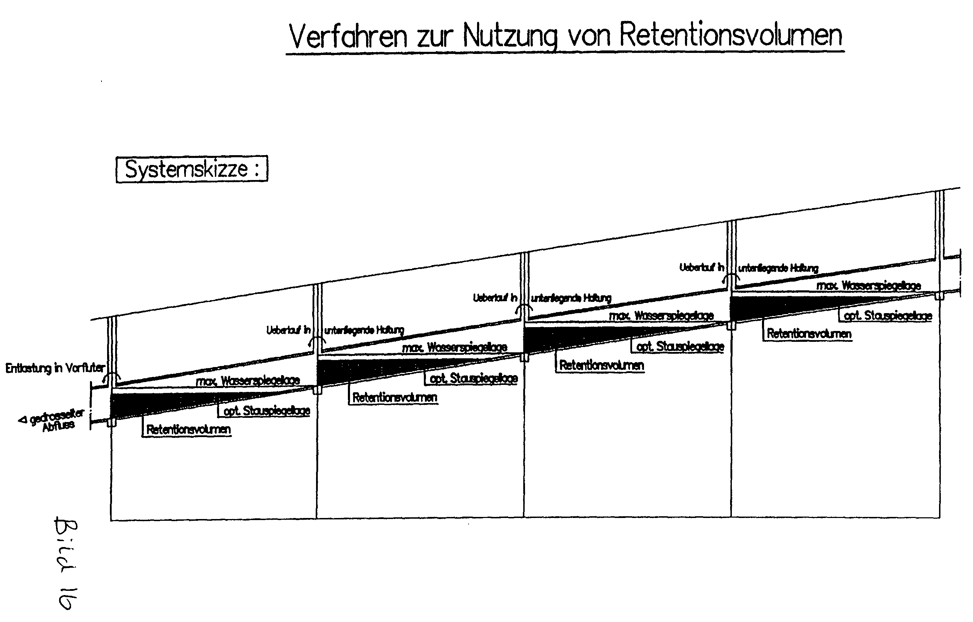

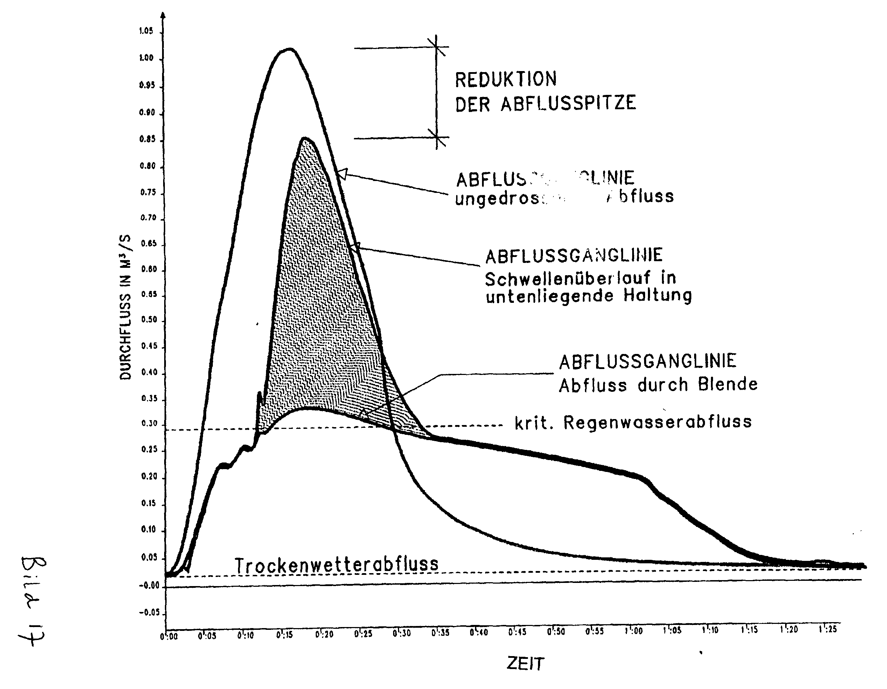

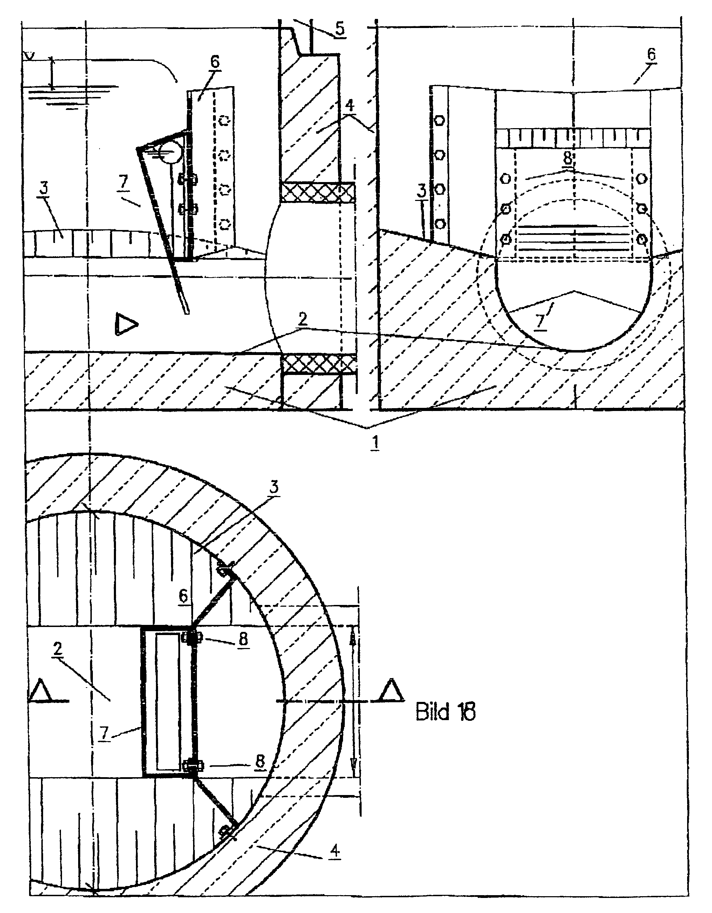

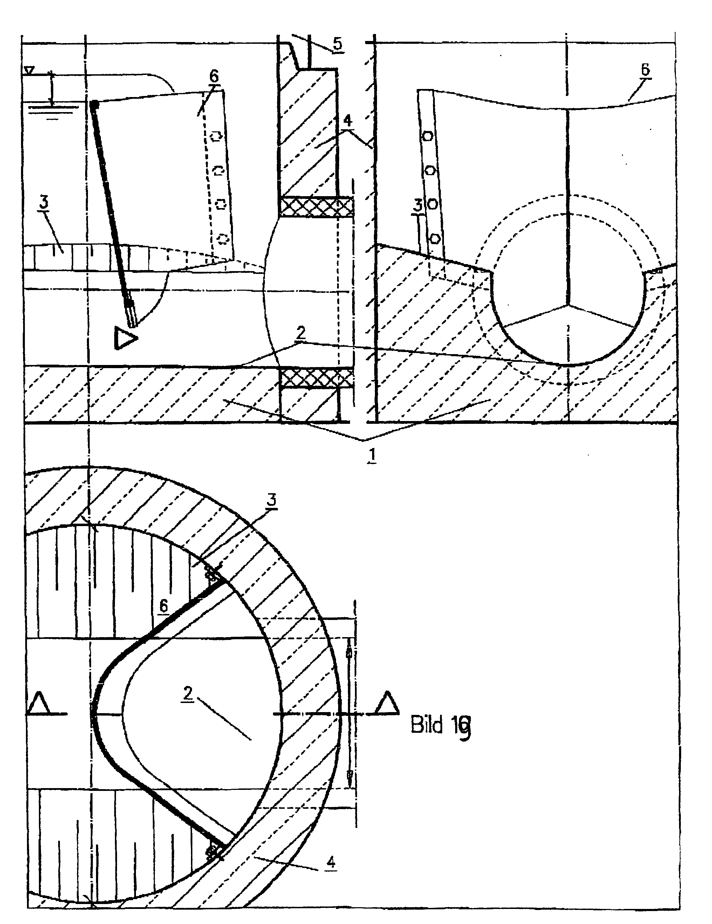

In den Figuren 16 - 18 ist auch die Möglichkeit dargestellt, dass ein Drosselorgan 7.7 zumindest teilweise als ein Spülkasten ausgebildet ist. Hierzu wird zwischen einer Kanalstaublende 8.3 und einer Verstellkeilblende 9.4 ein Raum 18 ausgebildet, der bei steigendem Abwasserspiegel durch eine permeable Membran 19 hindurch mit Wasser gefüllt werden kann.

Im unteren Bereich befindet sich zwischen Verstellkeilblende 9.4 und Kanalstaublende 8.3 eine Klappe 20, die mit einem Schwimmer 21 verbunden ist.

Ein gefüllter Raum 18 entleert sich selbständig bei nachlassendem Druck bzw. nachlassendem Abwasserspiegel und erzeugt dadurch ein Nachspülen des Kanals. Bevorzugt erfolgt der Entleerungsvorgang jedoch verzögert zum Abfluss in den Kanal. Dies wird durch eine nicht näher gezeigte Mechanik bewerkstelligt, die den verzögerten Öffnungsvorgang der Verschlussklappe 20 regelt. Nur so kann ein Schwall erzeugt werden, der den Kanal nachspült.

Nach Entleerung des Spülkastens wird die Verschlussklappe bei erneut steigendem Wasserspiegel verriegelt. Die Steuerung der Ver- und Entriegelung der Verschlussklappe erfolgt mechanisch oder pneumatisch mit Hilfe von dem innerhalb oder ausserhalb des Spülkastens liegenden Schwimmer 21.

| Positionszahlenliste | | | | | |
|---|---|---|---|---|---|
| 1 | Schacht | | x | Fliessrichtung | |

(fortgesetzt)

| Positionszahlenliste | | | | | |
|---|---|---|---|---|---|
| 2 | Kanalstück | | | | |
| 3 | Schachtgerinnensohle | | | | |
| 4 | Ausflussöffnung | | | | |
| 5 | Kanalrohr | | | | |
| 6 | Bankett | | | | |
| 7 | Drosselorgan | | | | |
| 8 | Kanalstaublende | | | | |
| 9 | Verstellkeilblende | | | | |
| 10 | Befestigungsschraube | | | | |
| 11 | Wasserspiegel | | | | |
| 12 | Randkante | | | | |
| 13 | max. Wasserspiegel | | | | |
| 14 | Wasserüberlauf | | | | |
| 15 | Keil | | | | |
| 16 | Ausschnitt | | | | |
| 17 | Einschnitt | | | | |
| 18 | Raum | | | | |
| 19 | Membran | | | | |
| 20 | Klappe | | | | |
| 21 | Schwimmer | | | | |
| | | | | | |
| | | | | | |
| | | | | | |
| | | | | | |
| | | | | | |
| | | | | | |
| | | | | | |
| | | | | | |
| | | | | | |
| | | | | | |
| | | | | | |

**Patentansprüche**

1. Vorrichtung zum Beeinflussen eines Abwasserstromes in einem Abwassersystem einer Siedlungswasserwirtschaft, insbesondere zur Reduktion der Spitzenabflüsse in diesen Abwassersystemen, mit einem Kanalschacht (1) und einem darin eingesetzten, der Begrenzung des Durchströmquerschnitts im Kanalschacht dienendes Drosselorgan (7), wobei das Drosselorgan (7 - 7.2) einen Überlauf (12, 14) aufweist, über den das Abwasser vor Überschreiten eines vorbestimmten maximalen Abwasserspiegels (11) beim Anstauen vor dem Drosselorgan (7) in den gleichen Kanalschacht (1) nach dem Drosselorgan (7) gelangen sollte, und wobei das Drosselorgan (7 - 7.2) aus einer den Überlauf (12, 14) aufweisenden Kanalstaublende (8 - 8.2) und einer vertikal verstellbaren Verstellblende zusammensetzt ist,

**dadurch gekennzeichnet,**

**dass** die Verstellblende als Verstellkeilblende (9 - 9.3) mit einem in das Abwasser einzutauchenden Keil (15) oder keilförmigen Ausschnitt (16) ausgebildet ist und die Kanalstaublende (8 - 8.2) und die Verstellkeilblende (9 - 9.3) von der Wand des Kanalschachtes (1) abstehen und entsprechend keilförmig oder gekrümmt ausgebildet sind und gegen die Fliessrichtung (x) des Abwassers anzustellen sind.

2.  Vorrichtung nach Anspruch 1, **dadurch gekennzeichnet, dass** Kanalstaublende (8, 8.1) und Verstellkeilblende (9 - 9.3) aus Blech oder Kunststoff besteht.

3.  Vorrichtung nach Anspruch 1 oder 2, **dadurch gekennzeichnet, dass** die Kanalstaublende (8.2) aus Beton besteht.

4.  Vorrichtung nach wenigstens einem der Ansprüche 1 bis 3, **dadurch gekennzeichnet, dass** die Verstellkeilblende (9 - 9.3) einen in das Abwasser eintauchenden Keil (15) oder einen keilförmigen Ausschnitt (16) aufweist.

5.  Vorrichtung nach wenigstens einem der Ansprüche 1 bis 4, **dadurch gekennzeichnet, dass** ein Querschnitt des Kanalstücks (2) vor dem Drosselorgan (7.2) fortlaufend reduziert ist.

6.  Vorrichtung nach wenigstens einem der Ansprüche 1 bis 5, **dadurch gekennzeichnet, dass** das Drosselorgan eine Randkante (12.2, 12.3) aufweist, die gegen die Fliessrichtung geneigt ist und/oder einen Einschnitt (17) aufweist.

7.  Vorrichtung nach wenigstens einem der Ansprüche 1 bis 6, **dadurch gekennzeichnet, dass** an dem Drosselorgan (7.7) ein Spülkasten vorgesehen ist.


**Claims**

1.  Apparatus for influencing a flow of waste water in a waste water system of a housing estate water supply, more especially for reducing the peak discharges in these waste water systems, said apparatus having a sewer manhole (1) and a throttling element (7), which is inserted in said manhole and serves to limit the cross-section of throughflow in the sewer manhole, the throttling element (7 - 7.2) having an overflow (12, 14), via which the waste water should pass into the same sewer manhole (1) downstream of the throttling element (7) prior to a predetermined maximum waste water level (11) being exceeded in the event of an accumulation upstream of the throttling element (7), and the throttling element (7 - 7.2) comprising a sewer retention diaphragm (8 - 8.2), which has the overflow (12, 14), and a vertically adjustable adjusting diaphragm, **characterised in that** the adjusting diaphragm is in the form of an adjusting wedge diaphragm (9 - 9.3) having a wedge (15) or wedge-shaped cutaway portion (16), which dips into the waste water, and the sewer retention diaphragm (8 - 8.2) and the adjusting wedge diaphragm (9 - 9.3) protrude from the wall of the sewer manhole (1) and are accordingly wedge-shaped or curved and are to be adjusted in opposition to the flow direction (x) of the waste water.

2.  Apparatus according to claim 1, **characterised in that** the sewer retention diaphragm (8, 8.1) and adjusting wedge diaphragm (9 - 9.3) are formed from sheet metal or plastics material.

3.  Apparatus according to claim 1 or 2, **characterised in that** the sewer retention diaphragm (8.2) is formed from concrete.

4.  Apparatus according to at least one of claims 1 to 3, **characterised in that** the adjusting wedge diaphragm (9 - 9.3) has a wedge (15), which dips into the waste water, or a wedge-shaped cutaway portion (16).

5.  Apparatus according to at least one of claims 1 to 4, **characterised in that** a cross-section of the sewer part (2) is continuously reduced upstream of the throttling element (7.2).

6.  Apparatus according to at least one of claims 1 to 5, **characterised in that** the throttling element has an edge (12.2, 12.3) which is inclined in a direction in opposition to the flow direction and/or has a notch (17).

**7.** Apparatus according to at least one of claims 1 to 6, **characterised in that** a flushing cistern is provided at the throttling element (7.7).

**Revendications**

**1.** Dispositif permettant d'influer sur un flux d'eaux usées dans un système d'eaux usées d'une gestion des eaux d'une zone urbaine, en particulier en vue de réduire les effluents de pointe dans ces systèmes d'eaux usées, avec un puits de canalisation (1) et un organe restricteur (7) placé dans ce dernier et servant à limiter la section de passage dans le puits de canalisation (7), l'organe restricteur (7 - 7.2) présentant un trop-plein (12, 14) par lequel les eaux usées doivent arriver, avant qu'elles n'excèdent un niveau d'eaux usées maximal prédéterminé (11) lors de l'accumulation devant l'organe restricteur (7), dans le même puits de canalisation (1) après l'organe restricteur (7) et l'organe restricteur (7 - 7.2) étant composé d'un obturateur de dérivation de canal (8 - 8.2) présentant le trop-plein (12, 14) et d'un obturateur de réglage déplaçable verticalement,

    **caractérisé par le fait**

    **que** l'obturateur de réglage se présente sous forme d'obturateur à coin de réglage (9 - 9.3) avec un coin (15) devant plonger dans les eaux usées ou une découpe cunéiforme (16) et que l'obturateur de dérivation de canal (8 - 8.2) et l'obturateur à coin de réglage (9 - 9.3) sont distants de la paroi du puits de canal (1) et sont réalisés cunéiformes ou courbés en conséquence et doivent être placés dans le sens contraire à la direction d'écoulement (x) des eaux usées.

**2.** Dispositif selon la revendication 1, **caractérisé par le fait que** l'obturateur de dérivation de canal (8, 8.1) et l'obturateur à coin de réglage (9 - 9.3) sont réalisés en tôle ou en matière plastique.

**3.** Dispositif selon la revendication 1 ou 2, **caractérisé par le fait que** l'obturateur de dérivation de canal (8.2) est réalisé en béton.

**4.** Dispositif selon au moins l'une des revendications 1 à 3, **caractérisé par le fait que** l'obturateur à coin de réglage (9 - 9.3) présente un coin (15) plongeant dans les eaux usées ou une découpe cunéiforme (16).

**5.** Dispositif selon au moins l'une des revendications 1 à 4, **caractérisé par le fait qu'**une coupe du tronçon de canal (2) est réduite en continu avant l'organe de restriction (7.2).

**6.** Dispositif selon au moins l'une des revendications 1 à 5, **caractérisé par le fait que** l'organe de restriction présente un rebord (12.2, 12.3) qui est incliné dans le sens contraire à la direction d'écoulement et/ou une découpe (17).

**7.** Dispositif selon au moins l'une des revendications 1 à 6, **caractérisé par le fait qu'**à l'organe de restriction (7,7) est prévu un bac de rinçage.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Bild 1

Bild 2

28

Bild 3

Bild 4

Bild 5

Bild 6

Bild 7

Bild 8

34

Bild 9

35

Bild 10

Bild 11

Bild 12

Bild 13

Bild 14

Schema "Styx" gebremstes Entwässerungssystem

Bild 15

# Verfahren zur Nutzung von Retentionsvolumen

Systemskizze :

Entlastung in Vorfluter

◁ gedrosselter Abfluss

Uebertauf in unterliegende Haltung

max. Wasserspiegellage

opt. Stauspiegellage

Retentionsvolumen

Bild 16

EP 0 864 018 B1

REDUKTION
DER ABFLUSSPITZE

ABFLUS... ...LINIE
ungedros... ...bfluss

ABFLUSSGANGLINIE
Schwellenüberlauf in
untenliegende Haltung

ABFLUSSGANGLINIE
Abfluss durch Blende

krit. Regenwasserabfluss

Trockenwetterabfluss

DURCHFLUSS IN M³/S

ZEIT

Bild 17

43

EP 0 864 018 B1

Bild 18

Bild 19